# EUROPEAN PATENT APPLICATION

(11) **EP 4 428 201 A1**
(43) Date of publication of application: **11.09.2024**
(21) Application number: 23160446.3
(22) Date of filing: 07.03.2023
(51) Int. Cl.: C09B 23/01, C09B 23/10

(54) **NEW INFRARED ABSORBERS**

(71) Applicant: European Central Bank, 60314 Frankfurt am Main (DE)
(72) Inventor: Loccufier, Johan, 9052 Zwijnaarde (BE); Louwet, Jos, 2000 Antwerpen (BE)
(74) Representative: Prinz & Partner mbB

(57) **Abstract**

A near infrared dye having a chemical structure according to Formula I, 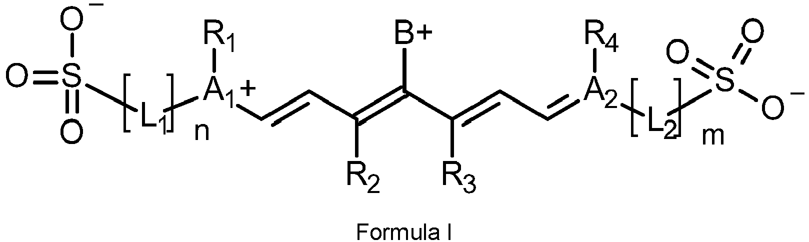 wherein
A₁ and A₂ independently from each other represent an optionally annulated five membered heterocycle;
R₁ and R₄ are independently from each other selected from the group consisting of a substituted or unsubstituted alkyl group, a substituted or unsubstituted alkenyl group, a substituted or unsubstituted alkynyl group, a substituted or unsubstituted aralkyl group, a substituted or unsubstituted alkaryl group and a substituted or unsubstituted aryl or heteroaryl group;
n and m independently from each other represent 0 or 1;
L₁ and L₂ independently from each other represent a divalent linking group comprising no more than 14 carbon atoms and coupled to a carbon atom of respectively A₁ and A₂;
B represent a nitrogen containing functional group;
R₂ and R₃ are independently from each other selected from the group consisting of a hydrogen, a substituted or unsubstituted alkyl group, a substituted or unsubstituted alkenyl group, a substituted or unsubstituted alkynyl group, a substituted or unsubstituted aralkyl group, a substituted or unsubstituted alkaryl group and a substituted or unsubstituted aryl or hetero-aryl group;
R₂ and R₃ together may represent the necessary atoms to form a five to eight membered ring.

## Description

### TECHNICAL FIELD OF THE INVENTION

The present invention relates to new infrared absorbers, which have an improved stability.

### BACKGROUND ART FOR THE INVENTION

Infrared technology has been widely used in optical and recording applications, leading to a need for tunable infrared absorbers with high stability when exposed to light under ambient conditions, resulting in a dilemma for the design of (near) infrared absorbers.

It is well known that inorganic infrared absorber have excellent stability. However, they often have a broad absorption in the infrared, making the design of optical elements difficult, when aiming only absorption in a specific part of the infrared spectrum.

Organic infrared absorbers and especially cyanine based infrared absorbers, have sharp and easily tunable infrared absorption. However, especially cyanines are known to be notoriously unstable when exposed to light under ambient conditions, making them not very suitable for the design of optical elements. In consequence, a need exists to provide a tunable IR absorber in a specific part of the infrared absorption, which are at the same time stable when exposed to light under ambient conditions.

### Summary of the invention

The subject matter of the independent claims satisfies the respective need. Further embodiments are indicated within the dependent claims and the following description, each of which, individually or in a suitable (sub)combination, may represent aspects of the invention. Some specifics of the present invention are described with regard to corresponding near infrared dyes and production methods thereof. However, the advantages and preferred embodiments described with regard to the indicated dyes are correspondingly applicable to the inventive dispersions, coating compositions, resins, radiation curable compositions, and uses.

A summary of certain embodiments disclosed herein is set forth below. It should be understood that these aspects are presented merely to provide a brief summary of these embodiments and that these aspects are not intended to limit the scope of the present invention. The invention may encompass a variety of aspects that may not be set forth below.

Any of the aspects disclosed below may be part of the present invention as such or based on any suitable (sub-)combination with other aspects and embodiments of the present invention provided that the skilled artisan considers the respective feature combination to be reasonable. In particular, all facultative aspects ("may", "can", etc.) may also be true aspects of the present invention.

According to the present invention, it has been found that tuning the structure of cyanine based (near) infrared absorbers results in highly stable (near) infrared dyes while largely maintaining their spectral characteristics. In particular, the near infrared absorber dyes of the present invention exhibit a suitable lightfastness performance while maintaining in particular optical density properties.

According to a first aspect of the present invention, a new class of cyanine based (near) infrared absorbers of Formula I 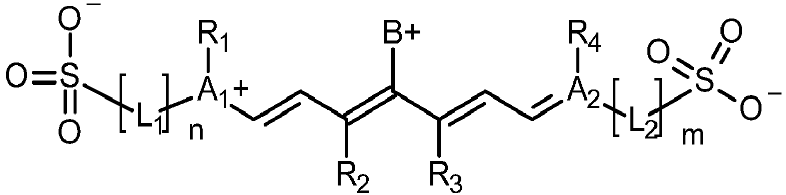 according to claim 1 is provided, combining excellent stability with excellent optical properties.

A second aspect of the present invention relates to a dispersion composition comprising a near infrared dye of the first inventive aspect and one or more dispersion additives.

A third aspect of the present invention relates to a resin based article comprising a near infrared dye of the first inventive aspect.

A fourth aspect of the present invention relates to a coating comprising a near infrared dye of the first inventive aspect and one or more coating additives.

A fifth aspect of the present invention relates to a radiation curable composition comprising a near infrared dye of the first inventive aspect and one or more radiation curable additives.

A sixth aspect of the present invention relates to a use of a near infrared dye of the first inventive aspect in applications requiring high weathering stability.

A seventh aspect of the present invention relates to a method of production of a near infrared dye of the first inventive aspect characterized in that the near infrared dye is prepared from a dye former starting material of Formula C-1, C-2 or C-3 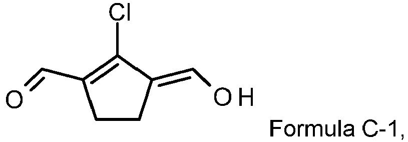 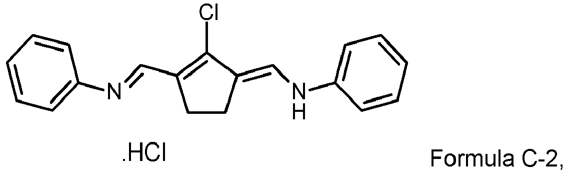 or

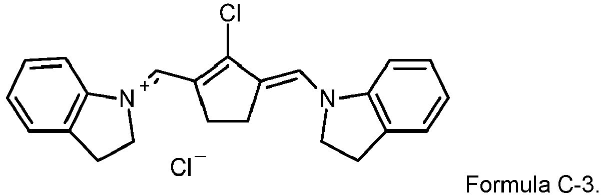

Further aspects and embodiments of the invention will become apparent from the description hereinafter.

### DETAILED DESCRIPTION OF EMBODIMENTS

As already set out above, the present inventors have found out that the new class of cyanine based (near) infrared absorbers of Formula I 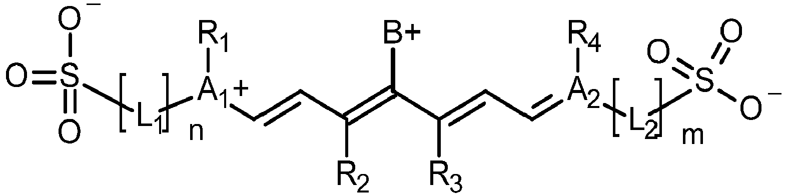 according to claim 1 combine excellent stability properties while maintaining excellent optical properties, such as optical density properties and/or greyscale contrast properties (see examples 11 to 13 of the example section below). Accordingly, the inventive near infrared dyes (synonym: near infrared absorbers or infrared absorbers) can be used in applications requiring suitable weathering stability.

According to the present invention, the near IR dyes are particularly suitable, as they exhibit a reduced grade of degradation of the near IR dye, which is reflected in higher percentage of optical density at λₘₐₓ left after respective day light indoor exposure of 10 / 30 days under the conditions described below (% O.D.) in relation to comparative infrared absorbers not according to the present invention. In this regard, the inventive near IR absorber dyes exhibit at least 20 %, preferably at least 50 % optical density at λₘₐₓ left after the respective 10 / 30 days of day light indoor exposure. In addition or alternatively, the near IR dyes of the first aspect of the present invention, exhibit an suitable light stability class determined in relation to Greyscale contrast (Blue Wool Scale) according to ISO 12040:1997 (Graphic technology prints and printing inks, assessment of light fastness using filtered xenon arc light), wherein the near IR dyes according to the present invention exhibit at least a Blue Wool Scale of 4 to 5 (fair lightfastness, wherein the pigment will remain unchanged with proper mounting and display for 15 to 50 years), preferably at least a Blue Wool Scale of at least 6 (very good lightfastness, wherein the pigment will remain unchanged for 50 to 100 years of light exposure with proper mounting and display) or more preferably at least a Blue Wool Scale of at least 7 to 8 (excellent lightfastness, pigment will remain unchanged for more than 100 years of light exposure with proper mounting and display).

In view of the improved weathering stability, the near infrared dyes according to the present invention can be implemented in any application where infrared absorbers in the wavelength range between 600 nm to 1400 nm are required.

Applications requiring high (UV) weathering stability are particularly of interest. Such applications are for example climate control systems in buildings and cars, polymer processing and additive manufacturing technologies based on resin fusing, optical filters, solar cells, light emitting diodes and drying accelerators.

Other applications relate to the use of the near infrared dyes according to the present invention in relation with security or valuable documents, such as a banknote, a certificate or a certified copy of a document paper. In particular security applications in or on security or valuable documents, such as security ink applications.

In the context of the present invention, the expression "preferably represents" or "a preferred embodiment" or "a preferred embodiment applied to all aspects and embodiments of the present invention" means that the feature or feature combination disclosed in this preferred embodiment can be combined in addition to or alternatively to the features of the inventive subject matter of the inventive aspects or each of the inventive embodiments, provided the resulting feature combination is reasonable to a person skilled in the art.

### Near infrared dye

The near infrared dye according to the first inventive aspect of the present invention (synonym: near infrared absorber or infrared absorber) has a chemical structure according to Formula I, 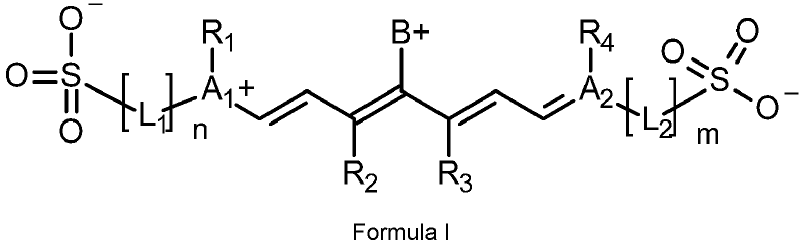 wherein
A₁ and A₂ independently from each other represent an optionally annulated five membered heterocycle;
R₁ and R₄ are independently from each other selected from the group consisting of a substituted or unsubstituted alkyl group, a substituted or unsubstituted alkenyl group, a substituted or unsubstituted alkynyl group, a substituted or unsubstituted aralkyl group, a substituted or unsubstituted alkaryl group and a substituted or unsubstituted aryl or heteroaryl group;
n and m independently from each other represent 0 or 1;
L₁ and L₂ independently from each other represent a divalent linking group comprising 1 to 14 carbon atoms and coupled to a carbon atom of respectively A₁ and A₂;
B represents a nitrogen containing functional group;
R₂ and R₃ are independently from each other selected from the group consisting of a hydrogen, a substituted or unsubstituted alkyl group, a substituted or unsubstituted alkenyl group, a substituted or unsubstituted alkynyl group, a substituted or unsubstituted aralkyl group, a substituted or unsubstituted alkaryl group and a substituted or unsubstituted aryl or hetero-aryl group; and wherein the substituents R₂ and R₃ optionally together represent the necessary atoms to form a five to eight membered ring.

According to the present invention, the expression "divalent linking group comprising 1 to 14 carbon atoms" includes 1, 2, 3, 4, 5, 6, 7, 8, 9, 10, 11, 12, 13, or 14 carbon atoms, wherein the carbon atoms may form a carbocyclic ring system.

The near infrared dye according to the present invention generally has an absorption maximum in part of the near infrared spectrum, preferably has an absorption maximum in the region from 600 nm to 2500 nm, more preferably in the region from 650 nm to 2000 nm, most preferably in the region from 750 nm to 1400 nm.

B preferably represents a substituted or unsubstituted nitrogen containing aromatic heterocycle, more preferably a six membered nitrogen containing aromatic heterocycle, a substituted or unsubstituted pyridine being particularly preferred. According to a preferred embodiment applicable to all aspects and embodiments of the present invention, B represents a symmetric substituted or unsubstituted nitrogen containing aromatic heterocycle, more preferably a symmetric substituted or unsubstituted pyridine.

A₁ and A₂ independently from each other preferably represent an annulated five membered heterocycle. According to a further preferred embodiment, A₁ and A₂ are independently from each other preferably selected from the group consisting of a thiazole, a benzothiazole, a naphtothiazole, an oxazole, a benzoxazole, a naphtoxazole, an indolinine, a naphtinolinine, an imidazole, a benzimidazole, a naphtimidazole and a naphtostyryl group. According to an even further preferred embodiment applicable to all aspects and embodiments of the present invention, A₁ and A₂ represent the same annulated five membered heterocycle.

R₁ and R₄ independently from each other preferably represent a substituted or unsubstituted alkyl group, more preferably an unsubstituted alkyl group, most preferably a C1 to C4 alkyl group, particularly preferred a methyl or an ethyl group. According to a preferred embodiment applicable to all aspects and embodiments of the present invention, R₁ and R₄ represent the same substituent.

According to the present invention, the expression C1 to C4 alkyl includes, C1, C2, C3 and C4 alkyl substituents, in particular, methyl, ethyl, n-propyl, isopropyl, n-butyl, sec-butyl, isobutyl, and tert-butyl.

R₂ and R₃ together preferably represent the necessary atoms to form a five to eight membered ring, a five or six membered ring being more preferred, a five membered ring being particularly preferred. According to a preferred embodiment applicable to all aspects and embodiments of the present invention, the five to eight membered ring, preferably five or six membered ring formed by R₂ and R₃ is symmetric.

L₁ and L₂ independently from each other preferably comprise a carbocyclic aromatic ring, a substituted benzene ring being particularly preferred. According to a preferred embodiment applicable to all aspects and embodiments of the present invention, L₁ and L₂ represent the same carbocyclic aromatic ring, preferably the same substituted benzene ring.

According to a preferred embodiment applicable to all aspects and embodiments of the present invention, the near infrared dye according to Formula I has a symmetric structure, meaning that A₁ and A₂ represent the same heterocycle, L₁ and L₂ represent the same linking group, R₁ and R₄ represent the same substituents, R₃ and R₄ represent the same atom(s) and n and m represent the same integer. This symmetric setup of the near-infrared dyes is particularly preferred because the preparation of the symmetric near-infrared dyes can be done more easily and with higher purity compared to non-symmetrical setups. A further improvement relates to the finding that the stacking of near infrared dye chromophores of the present invention in aggregates or in crystals using symmetric structures leads in the vast majority of the cases to a higher aggregation or crystal energy compared to non-symmetric analogues. Stacking and crystal energy are in direct proportion to the increase in light fastness. Therefore, symmetric structures of the inventive near infrared dyes are in particular preferred as they allow a time and cost effective manufacture of pure dye constituents and at the same time result in a constituent exhibiting an increased light fastness.

According to a preferred embodiment, the near infrared dye according to the present invention has a chemical structure according to Formula II, 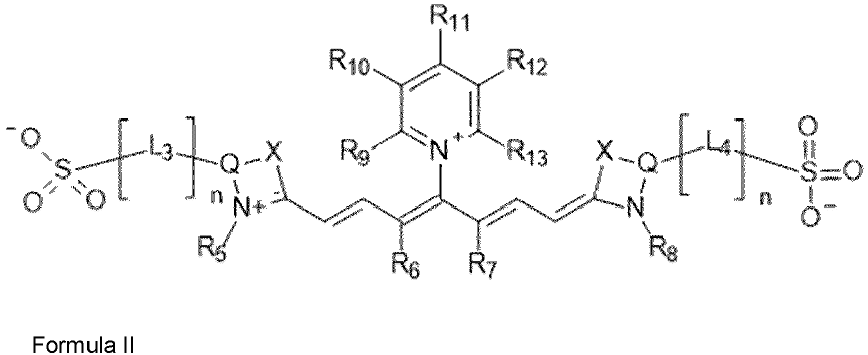 wherein
R₅ and R₈ are independently from each other selected from the group consisting of a substituted or unsubstituted alkyl group, a substituted or unsubstituted alkenyl group, a substituted or unsubstituted alkynyl group, a substituted or unsubstituted aralkyl group, a substituted or unsubstituted alkaryl group and a substituted or unsubstituted aryl or heteroaryl group;
R₆ and R₇ are independently from each other selected from the group consisting of a hydrogen, a substituted or unsubstituted alkyl group, a substituted or unsubstituted alkenyl group, a substituted or unsubstituted alkynyl group, a substituted or unsubstituted aralkyl group, a substituted or unsubstituted alkaryl group and a substituted or unsubstituted aryl or hetero-aryl group;
wherein the substituents R₆ and R₇ optionally together represent the necessary atoms to form a five to eight membered ring;
R₉ to R₁₃ are independently from each other selected from the group consisting of a hydrogen, a substituted or unsubstituted alkyl group, a substituted or unsubstituted alkenyl group, a substituted or unsubstituted alkynyl group, a substituted or unsubstituted aralkyl group, a substituted or unsubstituted alkaryl group, a substituted or unsubstituted aryl or heteroaryl group, an alkoxy, an amine, an ester, an amide, a halogen and a thioether;
wherein the neighbouring substituents R₉ and R₁₀, R₁₀ and R₁₁, R₁₁ and R₁₂, and/or R₁₂ and R₁₃ optionally together represent the necessary atoms to form a five to eight membered ring;
X is selected from the group consisting of S, O, NR₁₄ and CR₁₅R₁₆;
R₁₄, R₁₅ and R₁₆ are independently from each other selected from the group consisting of a substituted or unsubstituted alkyl group, a substituted or unsubstituted alkenyl group, a substituted or unsubstituted alkynyl group a substituted or unsubstituted alkaryl group, a substituted or unsubstituted aralkyl group and a substituted or unsubstituted aryl or heteroaryl group;
wherein the substituents R₁₅ and R₁₆ optionally together represent the necessary atoms to form a five to eight membered ring;
Q represents the necessary atoms to form an optionally annulated five membered heterocycle;
n represents 0 or 1; and
L₃ and L₄ independently from each other represent a divalent linking group comprising 1 to 14 carbon atoms and coupled to a carbon atom of Q.

R₅ and R₈ independently from each other preferably represent a substituted or unsubstituted alkyl group, more preferably an unsubstituted alkyl group, most preferably a C1 to C4 alkyl group, particularly a methyl or an ethyl group. According to a preferred embodiment applicable to all aspects and embodiments of the present invention, R₅ and R₈ represent the same substituent.

R₆ and R₇ together preferably represent the necessary atoms to form a five to eight membered ring, a five or six membered ring being more preferred, a five membered ring being particularly preferred. According to a preferred embodiment applicable to all aspects and embodiments of the present invention, the five to eight membered ring, preferably five or six membered ring formed by R₆ and R₇ is symmetric.

R₉ to R₁₃ are independently from each other preferably selected from the group consisting of a hydrogen, an alkyl group, a halogen and an amine, a hydrogen and an amine being particularly preferred.

According to a preferred embodiment applicable to all aspects and embodiments of the present invention, R₉ and R₁₃ more preferably represent the same substituent, such as hydrogen.

According to a preferred embodiment applicable to all aspects and embodiments of the present invention, R₁₀ and R₁₂ more preferably represent the same substituent.

L₃ and L₄ independently from each other preferably comprise a carbocyclic aromatic ring, a substituted benzene ring being particularly preferred. According to a preferred embodiment applicable to all aspects and embodiments of the present invention, L₃ and L₄ represent the same carbocyclic aromatic ring, more preferably the same substituted benzene ring.

According to a preferred embodiment applicable to all aspects and embodiments of the present invention, the near infrared dye according to Formula II has a symmetric structure, meaning that L₃ and L₄ represent the same linking group, R₅ and R₈, R₉ and R₁₃, R₁₀ and R₁₂ respectively represent the same substituents, R₆ and R₇ represent the same substituents forming a five to eight membered ring, X represent the same group, Q represents the same atoms to form an optionally annulated five membered heterocycle, and n represents the same integer.

In another preferred embodiment, the infrared absorber according to the present invention has a chemical structure according to Formula III or Formula IV, 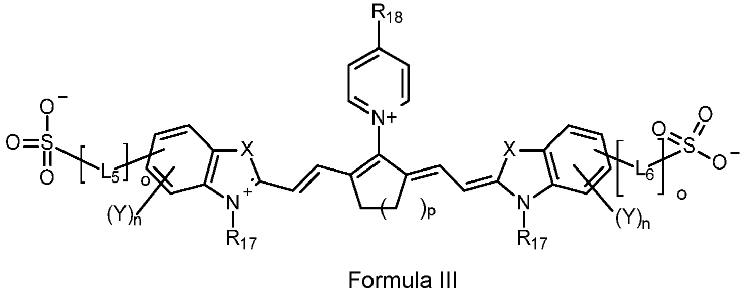 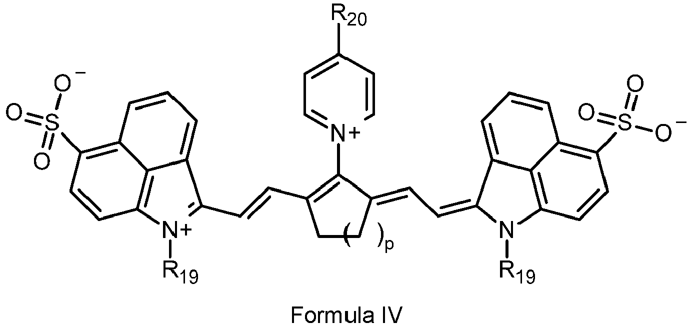 wherein
X represents S or O;
Y represents a hydrogen or a substituent selected from the group consisting of a substituted or unsubstituted alkyl group, a substituted or unsubstituted alkenyl group, a substituted or unsubstituted alkynyl group a substituted or unsubstituted alkaryl group, a substituted or unsubstituted aralkyl group, a substituted or unsubstituted aryl or heteroaryl group, a halogen and an alkoxy group;
n represents an integer from 1 to 3;
L₅ and L₆ independently from each other represent a divalent linking group comprising 1 to 14 carbon atoms;
o represents 0 or 1;
p represents 1 or 2;
R₁₇ and R₁₉ independently from each other represent a substituted or unsubstituted alkyl group;
R₁₈ and R₂₀ independently from each other represent a hydrogen, a substituted or unsubstituted alkyl group or NR₂₁R₂₂;
R₂₁ and R₂₂ are independently from each other selected from the group consisting of a substituted or unsubstituted alkyl group, a substituted or unsubstituted alkenyl group, a substituted or unsubstituted alkynyl group, a substituted or unsubstituted alkaryl group, a substituted or unsubstituted aralkyl group, and a substituted or unsubstituted aryl or heteroaryl group; and
wherein the substituents R₂₁ and R₂₂ optionally together represent the necessary atoms to form a five to eight membered ring.

According to a preferred embodiment applied to all aspects and embodiments of the present invention, p preferably represents 1.

According to a preferred embodiment applied to all aspects and embodiments of the present invention, R₁₇ and R₁₉ preferably represent a methyl or an ethyl group.

According to a preferred embodiment applied to all aspects and embodiments of the present invention, Y preferably represents hydrogen or a substituent selected from the group consisting of a C1 to C4 alkyl group, a C1 to C4 alkoxy group and a halogen.

According to the present invention, the expression "C1 to C4 alkoxy group" respectively includes C1-, C2-, C3-, and C4-alkoxy groups, in particular methoxy, ethoxy, propoxy, isopropoxy, butoxy, isobutoxy, tert-butoxy.

According to a preferred embodiment applied to all aspects and embodiments of the present invention, Y more preferably represents hydrogen or a substituent selected from the group consisting of a methyl, methoxy and chloride.

According to a preferred embodiment applied to all aspects and embodiments of the present invention, L₅ and L₆ preferably represent a substituted benzene ring.

According to a preferred embodiment applied to all aspects and embodiments of the present invention, the near IR dyes of Formula III has a symmetric structure, meaning that L₅ and L₆ represent the same linking group, X represents the same atom, R₁₇ represents the same substituents, R₁₈ represents either hydrogen or a symmetric group selected from a substituted or unsubstituted alkyl group or NR₂₁R₂₂, and n and o respectively represent the same integer.

According to a preferred embodiment applied to all aspects and embodiments of the present invention, the near IR dyes of Formula IV has a symmetric structure, meaning that R₁₉ represents the same substituents, and R₁₈ represents either hydrogen or a symmetric group selected from a substituted or unsubstituted alkyl group or NR₂₁R₂₂.

Typical examples of infrared absorbers according to the present invention combining excellent stability with excellent optical properties are given in Table 1 below, without being limited thereto.

**Table 1:**

| | |
|---|---|
| 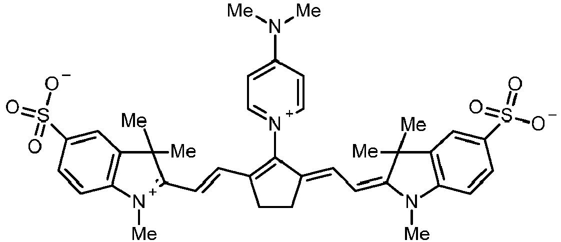 | IR-1 |
| 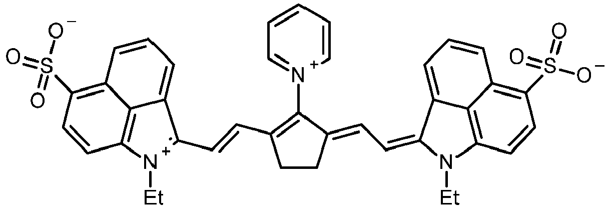 | IR-2 |
| 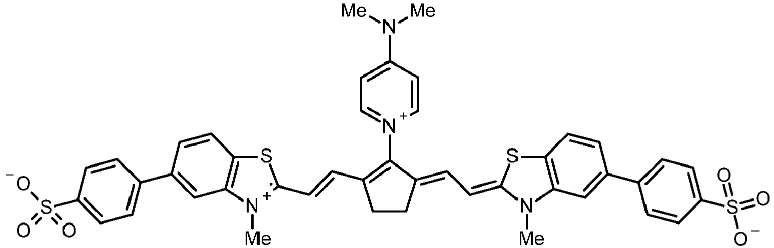 | IR-3 |
| 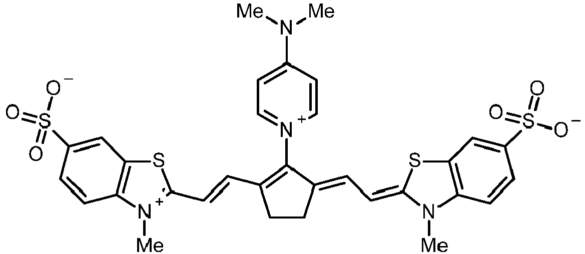 | IR-4 |
| 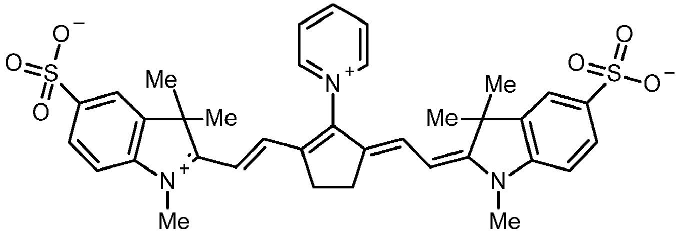 | IR-5 |
| 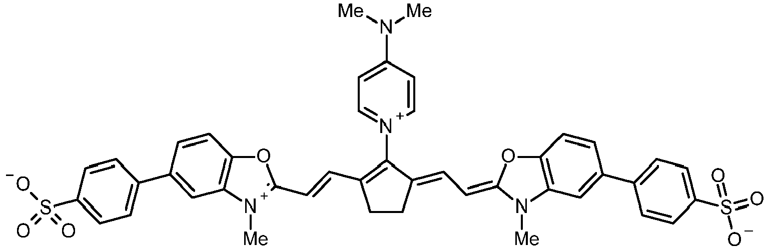 | IR-6 |
| 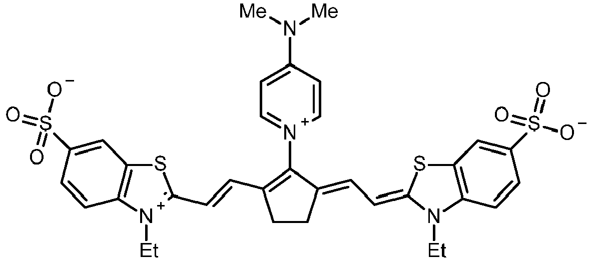 | IR-7 |
| 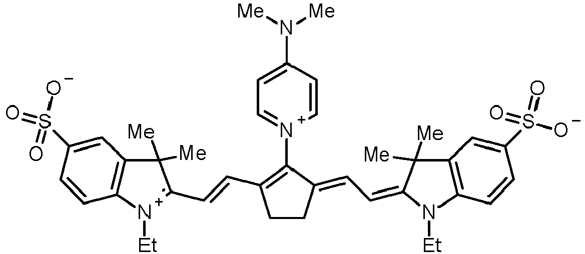 | IR-8 |
| 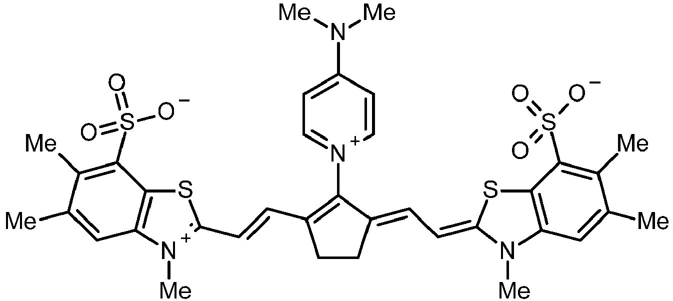 | IR-9 |
| 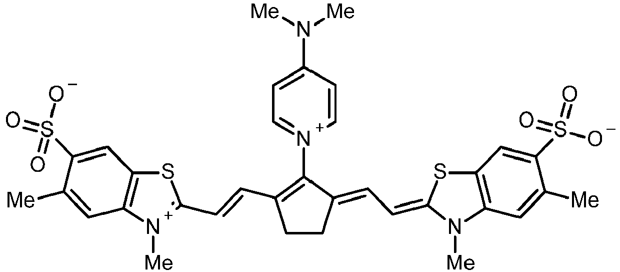 | IR-10 |
| 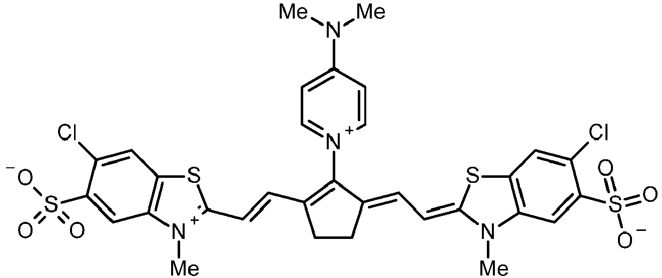 | IR-11 |
| 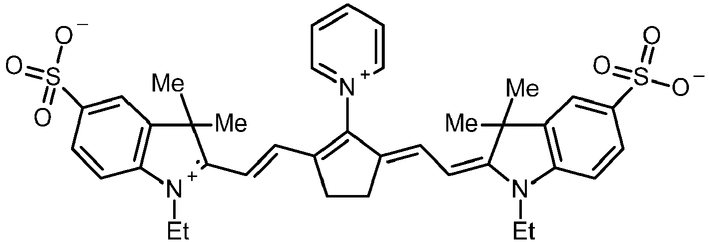 | IR-12 |
| 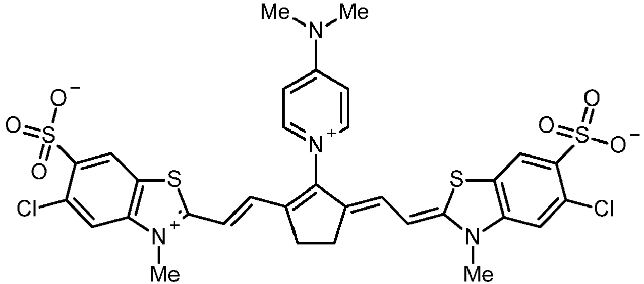 | IR-13 |
| 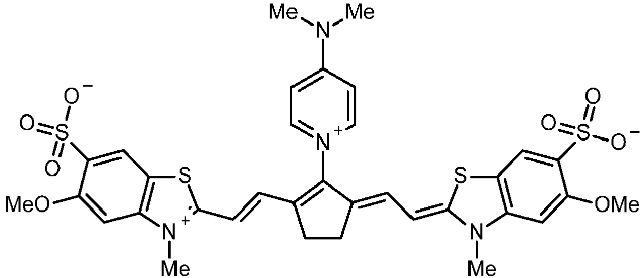 | IR-14 |
| 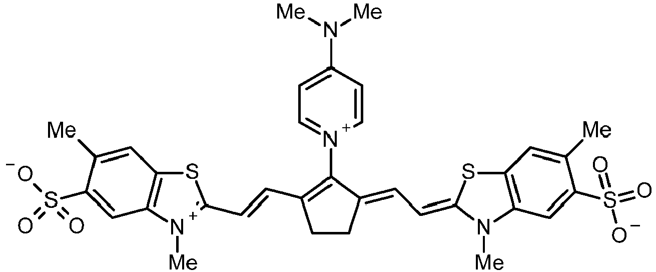 | IR-15 |
| 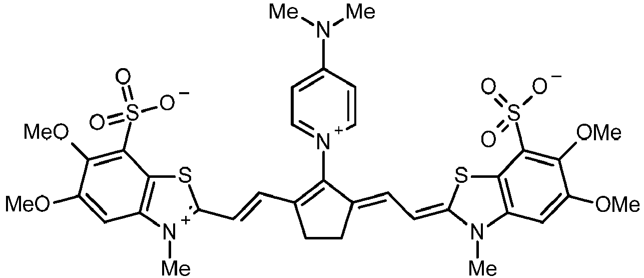 | IR-16 |
| 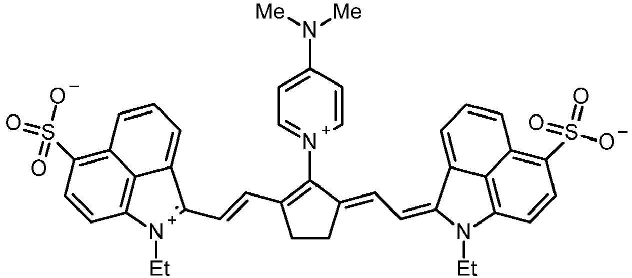 | IR-17 |
| 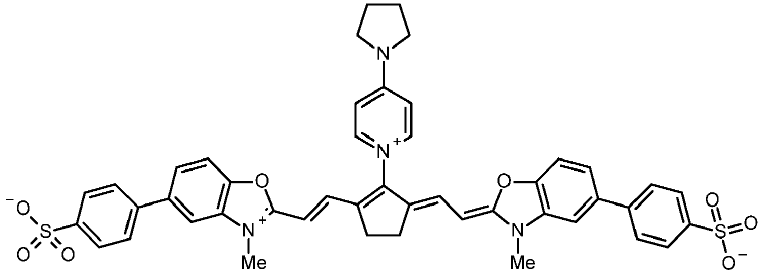 | IR-18 |
| 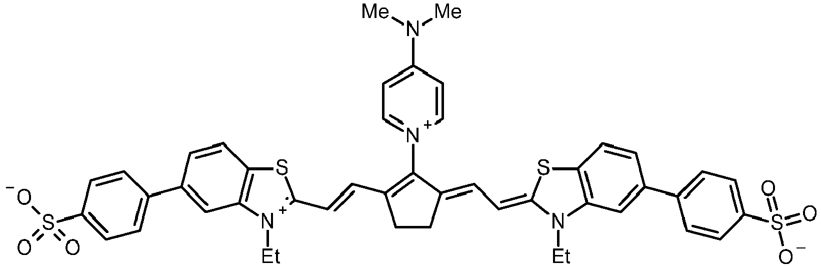 | IR-19 |
| 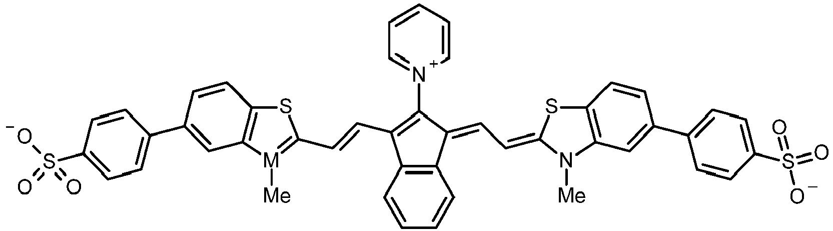 | IR-20 |
| 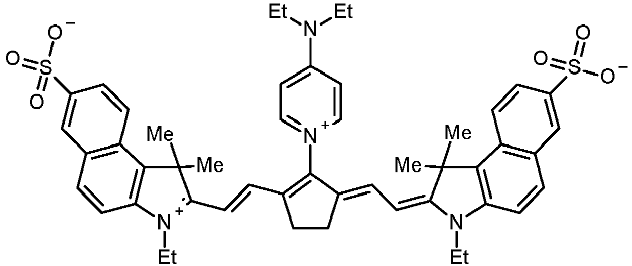 | IR-21 |
| 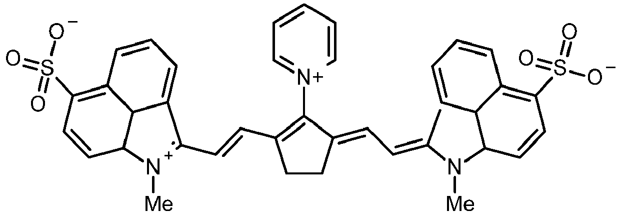 | IR-22 |
| 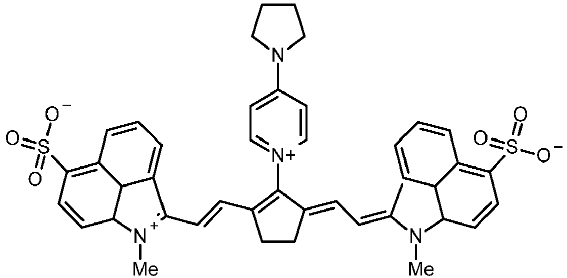 | IR-23 |
| 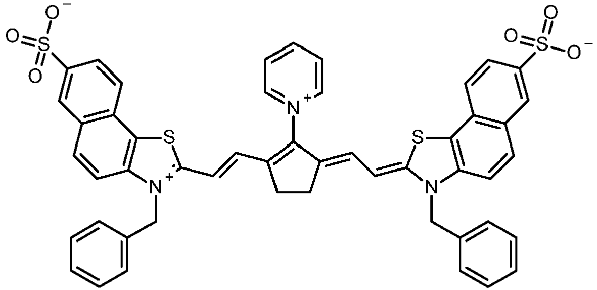 | IR-24 |

### Dispersion composition

According to the second aspect of the invention, a dispersion composition is provided comprising any of the near IR dyes of the first inventive aspect as described above together with one or more dispersion additives.

All embodiments of the near infrared dye as disclosed with respect to the first inventive aspect in the description or with respect to the exemplary section are alone or in respective (sub)combinations also applicable and, thus, disclosed with respect to the dispersion composition of the second inventive aspect.

The one or more dispersion additives may comprise a dispersion medium, such as a water based, solvent based, oil based or radiation curable based dispersion medium.

Furthermore, the dispersion additives may comprise a stabilization agent suitable to stabilize the infrared absorbers according to the present invention in the dispersion medium. Typically, the stabilizing agent is selected in function of the selected dispersing medium. Typical stabilizing agents are selected from the group consisting of surfactants and polymeric dispersing agents, wherein polymeric dispersing agents being particularly preferred.

### Resin based articles

The near infrared dye according to the first aspect of the present invention may be integrated into resin based articles according to the third inventive aspect.

All embodiments of the near infrared dye as disclosed with respect to the first inventive aspect in the description or with respect to the exemplary section are alone or in respective (sub)combinations also applicable and, thus, disclosed with respect to the resin based article of the third inventive aspect.

The resin contained in the resin based article may be selected from the group consisting of a synthetic, a semi-synthetic or natural polymeric material.

Synthetic resins (synonym: synthetic polymeric material) are defined in accordance with the present invention as resins generally requiring at least one polymerization step in the manufacturing of the resin. Typical examples of synthetic resins are selected from poly(olefines), such as high density polyethylene (PE), low density PE, polypropylene (PP), polyesters, poly(amides), poly(urethanes), poly(acetals), poly(ethers), or a combination thereof.

In contrast to synthetic resins, semi-synthetic resins (synonym: semi-synthetic polymeric material) are defined in accordance with the present invention as resins prepared from natural polymers, such as cellulose, by converting the natural polymer into the final resin by at least one synthetic chemical modification step, such as esterification or alkylation, etc.. Typical examples of semi-synthetic resins are selected from cellulose acetate butyrate (CAB), cellulose triacetate, nitrocellulose, carboxymethyl cellulose, or phthaloyl gelatin.

In contrast to semi-synthetic resins, natural resins (synonym: natural polymeric material) are defined in accordance with the present invention as resins extracted from natural resources, wherein the extracted natural polymeric material is not further converted using a synthetic chemical modification step, such as esterification or alkylation, etc.. Typical examples of natural resins are selected from dextranes, pullulan, etc.

Synthetic resins and semi-synthetic resins are particularly preferred with respect to all aspects and embodiments of the present invention, wherein synthetic resins being the most preferred.

Poly(esters), poly(amides) and poly(olefins) are particularly preferred, pol(olefins) being the most preferred.

Preferably, the resin based article forms a thermoplastic polymeric film or foil.

Examples of thermoplastic polymers suitable for forming the resin based article, including thermoplastic polymeric film or foil include polyolefines such as polyethylene (PE), polypropylene (PP), polyesters such as polyethylene terephthalate (PET), polyethylene 2,5-difurandicarboxylate (PEF) and polyethylene naphthenate (PEN), polylactic acid (PLA), polyacrylonitrile (PAN), polyamides (PA), polyurethanes (PU), polyacetals, such as polyvinylbutyral, polymethyl methacrylate (PMMA), polyimide (PI), polystyrene (PS), polycarbonate (PC), acrylonitrile-butadiene-styrene (ABS), polyvinylchloride (PVC), and copolymers thereof.

Preferred thermoplastic polymers are selected from polyethylene (PE), polypropylene (PP), polyethylene terephthalate (PET) and polyethylene 2,5-furandicarboxylate (PEF).

As PEF may be produced using a biobased furandicarboxylic acid (FDCA), the carbon footprint of its manufacturing process may be much smaller compared to for example the production of PET. Moreover, its barrier properties, for example for gaseous constituents, such as O₂ and CO₂, may be improved compared to that of PET.

To obtain a substantial homogeneous distribution, the near IR dye is preferably mixed with suitably softened resin material, preferably is admixed with a melt of the resin material.

The temperature at which the resin is softened or preferably melted generally depends on the polymeric resin material used. According to a preferred embodiment such polymeric resin material is selected, which can be suitably softened or melted for suitable admixture of the near IR dye at a softening temperature or melting temperature of ≤ 200°C, more preferably ≤ 175°C, most preferably ≤ 150°C.

As an example, in order to integrate and suitably admix the infrared absorber according to the first aspect of the present invention into the polymeric resin material to form the inventive resin based articles, preferably master batches may be prepared using the starting material, namely the polymeric resin material and the near IR dye of the present invention in powder form, preferably using a twin extruder.

### Coating

According to a fourth aspect of the present invention, a coating containing a near IR dye of the first inventive aspect as described above applied on a support material is provided.

All embodiments of the near infrared dye as disclosed with respect to the first inventive aspect in the description or with respect to the exemplary section are alone or in respective (sub)combinations also applicable and, thus, disclosed with respect to the coating of the fourth inventive aspect.

Typically, such an inventive coating is provided by applying the near IR dye as such or contained in a coating composition comprising one or more coating additives on a support material.

According to a preferred embodiment, the near IR dye or the coating composition containing the near IR dye and one or more coating additives may be applied on a support material by coextrusion or any conventional coating technique, such as selected from dip coating, knife coating, extrusion coating, spin coating, spray coating, slide hopper coating and curtain coating.

In particular, the coating composition containing the near IR dye and one or more coating additives may also be provided on the support material by any suitable printing method, such as selected from intaglio printing, screen printing, flexographic printing, offset printing, inkjet printing, rotogravure printing, etc. The suitable printing method may be selected in dependence of the properties of the support material.

Using a printing method is preferred when only a part / a region or several separate parts / regions of a support material shall be coated with the near IR dye.

With respect to the support material, any suitable support material may be used, such as for example a metallic support material, a glass support material, a polymeric support material, or a paper support material, or a textile support material. Accordingly, the near IR dye or the coating composition containing the near IR dye may be applied on a metallic support material, glass support material, polymeric support material, a paper support material or a textile support material.

### Radiation curable composition

According to a fifth aspect of the present invention, a radiation curable composition is provided comprising a near IR dye of the first inventive aspect as described above and one or more radiation curable additives.

All embodiments of the near infrared dye as disclosed with respect to the first inventive aspect in the general description or with respect to the exemplary section are alone or in respective (sub)combinations also applicable and, thus, disclosed with respect to the radiation curable composition of the fifth inventive aspect.

Generally, the one or more radiation curable additives facilitate polymerization of a respective polymerizable constituent, which polymerization is initiated by applying a respective suitable radiation. Accordingly, the one or more radiation curable additions may comprise at least one polymerization initiator, which facilitates start of a polymerization reaction upon application of a suitable radiation. The radiation curable additives may also comprise a polymerizable constituent, such as a monomer based medium, and / or a polymerization inhibitor.

According to one embodiment, the radiation curable composition may represent a printing ink, which may be optimized towards the printing technique used.

The printing ink may comprise, in addition to the near IR dye and the one or more radiation curable additive, one or more printing additives selected from a binder, a surfactant, a solvent, a dispersion stabilizer, etc.

According to one embodiment, the printing ink may be an inkjet ink, such as a UV curable inkjet ink. Generally, the solvent may be selected from any suitable solvent (aqueous media, solvent media, monomer based media, or mixtures thereof) for the respective application. UV curable inkjet inks may be used on non-absorbing substrates as well as on absorbing substrates, such as a cellulosic substrate. Also, the additives may be selected in dependence of the application (printing and curing) of an UV curable ink on a respective substrate, in particular application at high speed.

It has surprisingly been observed that the absorption characteristics of the near IR dyes according to the first aspect of the present invention does not substantially change during UV curing of the applied ink, contrary to those of conventional NIR absorbing compounds.

A UV curable ink typically comprises at least one photoinitiator and at least one polymerizable constituent, wherein the photoinitiator activates the polymerizable constituent, such as monomer based medium, at a suitable UV wavelength radiation. The UV curable ink may further comprise polymeric dispersants, a polymerization inhibitor, and/or a surfactant.

For reliable industrial inkjet printing, the viscosity of the UV curable inkjet inks is preferably no more than 20 mPa·s at 45°C, more preferably between 1 and 18 mPa·s at 45°C, and most preferably between 4 and 14 mPa·s at 45°C.

For good image quality and adhesion, the surface tension of the radiation curable inkjet ink is preferably in the range of 18 to 70 mN/m at 25°C, more preferably in the range of 20 to 40 mN/m at 25°C.

### Additives

Optionally, additional additives for further optimizing the weathering stability, in particular UV weathering stability of the near IR dyes according to all aspects and embodiments of the present invention can be integrated into the respective compositions and articles of the second to fifths aspects of the present invention. The additives can be selected in dependence of their respective application from the group consisting of antioxidants, UV absorbers, singlet oxygen quenchers, hindered amine light stabilizers, radical quenchers and ozone quenchers. An in depth discussion on suitable additives can be found in Plastics Additives Handbook , 5th Edition, edited by Dr. Hans Zweifel (Hanser Publishers, Munich, ISBN 3-446-21654-5).

### Applications

In principle, the near infrared dyes according to the present invention can be implemented in any application where infrared absorbers in the wavelength range between 600 nm to 1400 nm are required.

Applications requiring high (UV) weathering stability are particularly of interest. Such applications are for example climate control systems in buildings and cars, polymer processing and additive manufacturing technologies based on resin fusing, optical filters, solar cells, light emitting diodes and drying accelerators.

Other applications relate to the use of the near infrared dyes according to the present invention in relation with security or valuable documents, such as a banknote, a certificate or a certified copy of a document paper. In particular security applications are included, such as security ink applications.

### EXAMPLES

### Measurements

### Reflection spectra of the coated samples

The reflection spectra of each coated sample were measured on a Shimadzu UV-2600 spectrophotometer in reflection mode. Each sample was measured. A reference spectrum of the substrate used was measured and subtracted from the sample spectra to end up with the net spectrum of each sample. The spectra were expressed as absorption spectra.

### UV-VIS

The UV-VIS spectra were recorded on an Agilent Cary 60 UV-VIS spectrophotometer by diluting each sample in the solvents given in the examples in order to obtain a maximum absorbance between 0.5 and 1, in order to avoid oversaturation of the signal.

### TLC-MS

The molecular mass was determined using TLC-MS according to the following procedure. A TLC was run under circumstances given in the synthetic examples. The TLC was analyzed using a CAMAG TM TLC-MS interface coupled to an AmaZon TM SL mass spectrometer (supplied by Brüker Daltonics) via an Agilent TM 1100 HPLC pump. First a blank spectrum was taken by eluting a spot on the TLC plate where no compounds are present with a 0.01 molar solution of ammonium acetate in methanol. A second spectrum of the compound to be analyzed was taken by eluting the spot of the compound under consideration with a 0.01 molar solution of ammonium acetate in methanol. The first spectrum was subtracted from the second spectrum, giving the spectrum of the compound to be analyzed.

### Materials

**Dye former C-1** (CAS RN: 121276-93-5, (3Z)-2-chloro-3-(hydroxymethylidene)cyclopent-1-ene-1-carbaldehyde) has a structure as given below and was prepared according to WO2014/057018 (Agfa-Gevaert N.V.)

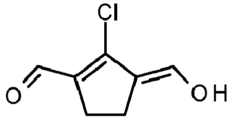

**Dye former C-2** has a structure given below.

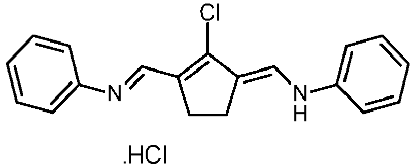

Dye former C-2 has been prepared according to Nagao et al., Dyes and Pigments, 73(3), 344-352 (2006).

**Dye former C-3** has a structure as given below.

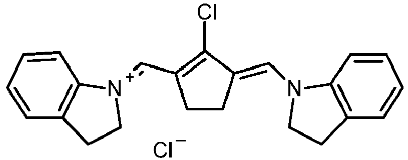

Dye formed C-3 was prepared as described below. 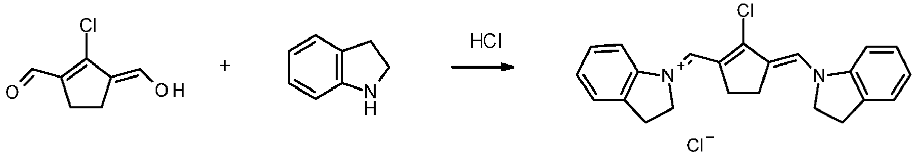 10 g (56 mmol) C-1 was dissolved in 30 ml acetonitrile. 14.7 g (0.123 mol) indoline was added dropwise. Upon addition of indoline, the temperature rose to 30°C. The reaction was allowed to continue for 30 minutes at room temperature. An additional 10 ml acetonitrile was added and the reaction mixture was cooled to 0°C. 6.6 g of a 37 w% hydrochloric acid solution was added. Upon addition of the hydrochloric acid, C-3 precipitated from the medium. An additional 250 ml acetonitrile was added and the mixture was stirred for 2 hours at room temperature. C-3 was isolated by filtration, washed with acetonitrile and dried under reduced pressure. 18.6 g (y : 84%) of C-3 was isolated (TLC analysis on a UNIPLATE Analtech HPTLC-RP18F-plate, eluent methanol/0.5 M NaCl 80/20, R_{f} = 0.15; UV-VIS in methanol : λₘₐₓ : 602 nm). The isolated C-3 was further analyzed using TLC-MS as described above.

### A: Synthesis of near IR absorber dyes according to the first aspect of the present invention

### Example 1: the synthesis of IR-1

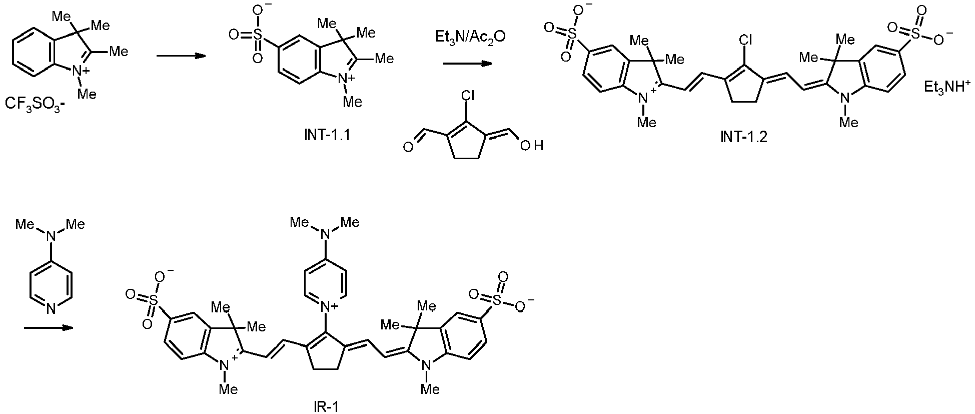

### The synthesis of INT-1.1

In a 100 ml round bottom flask, 15 ml of concentrated sulfuric acid was cooled to 0°C. 15 g (46 mmol) 1,2,3,3-tetramethylindol-1-ium triflate was added portion wise, followed by the dropwise addition of 10.2 ml oleum (65%) while stirring and maintaining the temperature at 0°C. The reaction mixture was allowed to gradually come to room temperature. The reaction mixture was slowly added to 500 ml ethyl acetate. The residue was isolated by decanting the solvent. The residue was treated with 200 ml ethanol and stirred for 16 hours.

INT-1.1 was isolated by filtration, washed with ethanol and dried under reduced pressure. 3.1 g (y : 28%) of INT-1.1 was isolated.

### The synthesis of INT-1.2

6 g (23.7 mmol) of INT-1.1 was dissolved in 25 ml methanol. 2.35 g (14.8 mmol) of dye former C-1 was added, followed by the addition of 11.13 ml acetic anhydride and 4.92 ml triethyl amine. Upon addition of both components, the temperature rose to 65°C. The reaction mixture was allowed to cool down to room temperature and the reaction was allowed to continue for 1 hour at room temperature. The reaction mixture was cooled to 0°C, followed by the addition of 100 ml ethyl acetate. INT-1.2 precipitated from the medium, was isolated by filtration, washed with ethyl acetate and dried under reduced pressure.

6.7 g (y : 78 %) of INT-1.2 was isolated as a dark green crystalline powder (TLC analysis on a UNIPLATE Analtech HPTLC-RP18F-plate, eluent methanol/0.5 M NaCl 80/20, Rf = 0.64; UV-VIS in methanol : λₘₐₓ : 806 nm).

### The synthesis of IR-1

1 g (1.37 mmol) of INT-1.2 was dissolved in 15 ml dimethyl sulfoxide. The reaction mixture was flushed with nitrogen. 307 mg (2.74 mmol) 4-dimethylaminopyridine was added and the reaction mixture was heated to 120°C for 2 hours. An additional 307 mg (2.74 mmol) 4-dimethylaminepyridine was added and the reaction was allowed to continue for an addition two hours at 120°C. The reaction mixture was heated to 135°C and the reaction was allowed to continue for an additional hour. The reaction mixture was allowed to cool down to 90°C and the crude IR-1 was isolated by filtration. The crude IR-1 was re-dispersed in a methanol/water mixture 1/1 and heated to 70°C. The mixture was allowed to cool down to room temperature and IR-1 was isolated by filtration. 0.657 g (y : 67 %) of IR-1 was isolated as brown crystalline powder (UV-VIS in methanol : λₘₐₓ = 826 nm).

### Example 2: the synthesis of IR-2

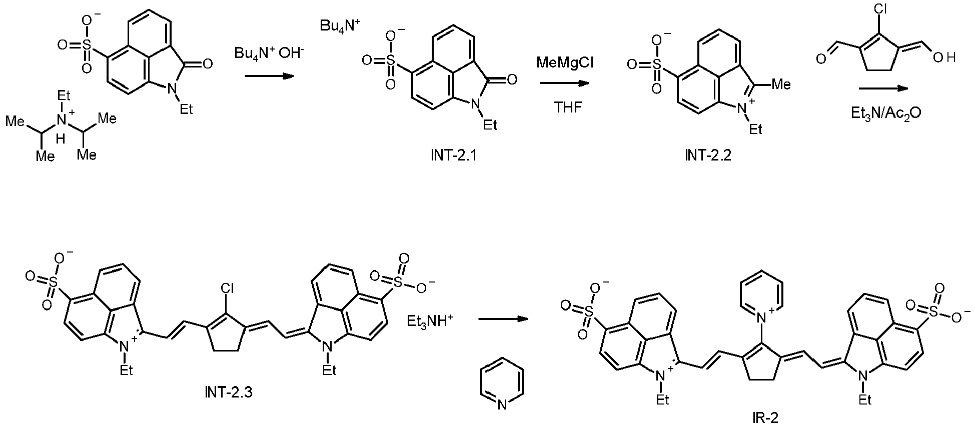

### The synthesis of INT-2.1

The starting material was prepared according to EP1093015 (Agfa-Gevaert N.V.). 70.7 g (0.174 mol) of the starting material was added to 300 ml acetone. 191 ml of a 25 w% solution of tetrabutyl ammonium hydroxide in water was added and the mixture was stirred for one hour upon which the starting material dissolved. 3 L methyl t.butyl ether was added, upon which INT-2.1 precipitated. The mixture was stirred for one hour. INT-2.1 was isolated by filtration, washed with methyl t.butyl ether and dried. 88 g (y : 97 %) of INT-2.1 was isolated.

### The synthesis of INT-2.2

5.18 g (10 mmol) of INT-2.1 was dissolved in 50 ml tetrahydrofuran. The mixture was flushed with nitrogen and heated to 55°C. 6.7 ml of a 22 w% solution of methyl magnesium chloride in tetrahydrofuran (1.49 g, 20 mmol) was added dropwise and the reaction was allowed to continue for two hours at 55°C. The reaction was allowed to cool down to room temperature and slowly added to 60 ml methanol, containing 4.5 ml methane sulfonic acid. The formed methane is removed by a nitrogen flow over the reaction mixture. INT-2.2 precipitated from the medium and was isolated by filtration. The isolated INT-2.2 was treated with methanol for one hour, isolated by filtration and dried. 2.18 g (y: 79%) of INT-2.2 was isolated (TLC analysis on a UNIPLATE Analtech HPTLC-RP18F-plate, eluent methanol/0.5 M NaCl 60/40: Rf : 0.61).

### The synthesis of I NT-2.3

37.5 g (0.136 mol) of INT-2.2 was dissolved in 250 methanol. 13.53 g (0.0853 mol) of dye former C-1 was added, followed by the addition of 64 ml acetic anhydride and 28.4 ml triethyl amine. Upon addition of both components, the temperature rose to 65°C. The reaction was allowed to continue for two hours at 60°C. INT-2.3 precipitated from the medium. INT-2.3 was isolated by filtration, treated with methanol, again isolated by filtration and dried. 21.56 g (y : 41%) of INT-2.3 was isolated (UV-VIS in methylene chloride : λₘₐₓ : 1060 nm).

### The synthesis of IR-2

1.5 g (1.93 mmol) of INT-2.3 was suspended in 30 ml dimethyl sulfoxide. The mixture was flushed with nitrogen and heated to 125°C. 1.53 g (19.3 mmol) pyridine was added and the reaction was allowed to continue for two hours at 125°C. The reaction mixture was allowed to cool down to room temperature and IR-2 was isolated by filtration. IR-2 was treated in methanol for 16 hours, isolated by filtration and dried. 0.88 g (y : 64%) of IR-2 was isolated as brown crystalline powder.

### Example 3: the synthesis of IR-3

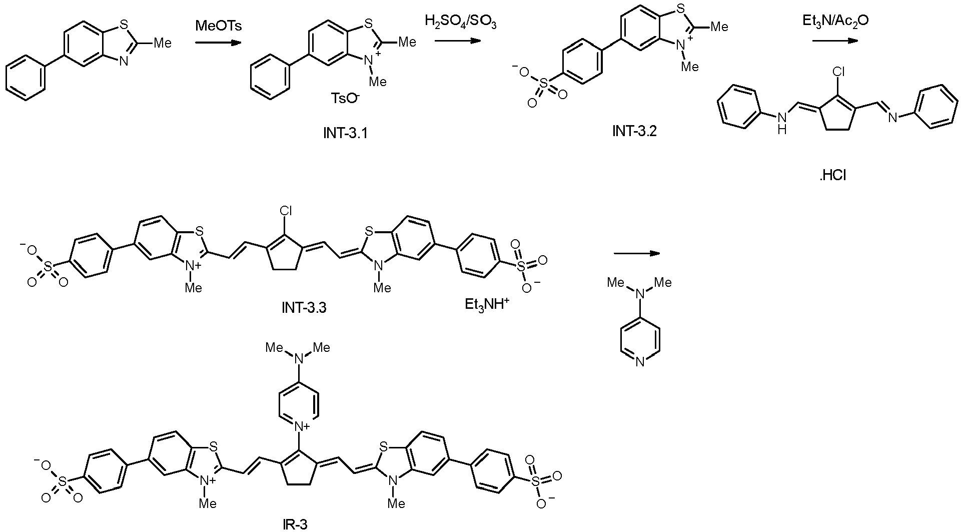

### The synthesis of INT-3.1

10 g (44 mmol) 2-methyl-5-phenyl-1,3-benzothiazole was dissolved in 44 ml sulfolane. 16 g (88 mmol) methyl tosylate was added and the reaction mixture was heated to 140°C. The reaction was allowed to continue at 140°C for one and a half hour. The reaction mixture was cooled down to room temperature and 200 ml acetone was added, upon which INT-3.1 precipitated from the medium. INT-3.1 was isolated by filtration, washed with acetone and dried under reduced pressure. 13 g (y : 72 %) of INT-3.1 was isolated.

### The synthesis of INT-3.2

17 g (41 mmol) of INT-3.1 was dissolved in 17 ml concentrated sulfuric acid. The reaction mixture was cooled to room temperature and 13.6 ml of a 65 w% oleum solution in sulfuric acid was added while maintaining the temperature below 20°C. The reaction was allowed to continue for 30 minutes at room temperature. INT-3.2 was precipitated by slowly adding 300 ml methanol to control the rise in temperature. The mixture was cooled down to room temperature. INT-3.2 was isolated by filtration, washed with methanol until acid free and dried. 11.2 g (y : 85%) of INT-3.2 was isolated (TLC analysis on a UNIPLATE Analtech HPTLC-RP18F-plate, eluent methanol/0.5 M NaCl 50/50 : Rf : 0.63). INT-3.2 was further analyzed using TLC-MS to confirm the structure of INT-3.2.

### The synthesis of INT-3.3

11 g (34.4 mmol) of INT-3.2 and 5.94 g (17 mmol) of dye former C-2 were suspended in 80 ml dimethyl sulfoxide. 16 ml acetic anhydride and 9.4 ml triethyl amine were added. The reaction mixture was heated to 65°C and the reaction was allowed to continue at 65°C for 30 minutes. The reaction mixture was cooled down to room temperature and INT-3.3 was isolated by filtration. INT-3.3 was washed with dimethyl sulfoxide until an almost colorless filtrate was obtained, treated with methanol, isolated by filtration and dried under reduced pressure. 7.08 g (y : 48 %) of INT-3.3 was obtained (UV-VIS in dimethyl acetamide : λₘₐₓ : 850 nm).

### The synthesis of IR-3

7.1 g (8.23 mmol) of INT-3.3 was suspended in 80 ml dimethyl sulfoxide. The reaction mixture was flushed with nitrogen and 4.02 g (33 mmol) 4-dimethylamino-pyridine was added. The mixture was heated to 130°C for 1 hour. The reaction was monitored using UV-VIS spectroscopy and considered complete when the absorption of INT-3.3 at 850 nm completely disappeared. The reaction mixture was cooled down to room temperature and IR-3 was isolated by centrifugation at 3500 rpm for one hour. The isolated IR-3 was treated with 80 ml methanol and isolated by centrifugation at 3500 rpm for one hour. 10 ml methanol was added to the isolated IR-3 and IR-3 was isolated by filtration followed by drying under reduced pressure. 2.45 g (y : 35%) of IR-3 was isolated (UV-VIS in dimethyl acetamide : λₘₐₓ : 867 nm, with considerable scattering due to the low solubility).

### Example 4: the synthesis of IR-6

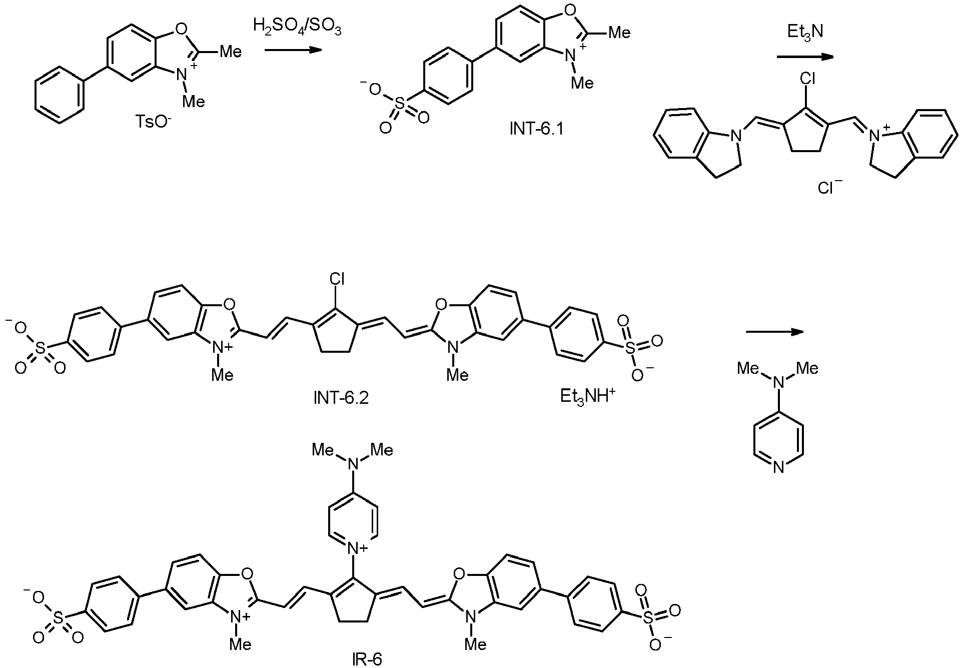

### The synthesis of INT-6.1

250 g (0.632 mol) 2,3-dimethyl-5-phenyl-1,3-benzoxazol-3-ium tosylate (KR2019023300 (Dongwoo Fine-Chem. Co., Ltd.)) was dissolved in 250 ml concentrated sulfuric acid while maintaining the temperature below 15°C. 117 ml of a 65 w% oleum solution in sulfuric acid was added dropwise, while maintaining the temperature at 15°C. The reaction mixture was heated to room temperature and the reaction was allowed to continue for 30 minutes at room temperature. INT-6.1 was precipitated by adding 2.5 I ethanol, while maintaining the temperature below 35°C. The mixture was stirred for two hours at room temperature. INT-6.1 was isolated by filtration and thoroughly washed with ethanol until acid free. The isolated INT-6.1 was dried. 176 g (y : 92 % of INT-6.1 was isolated as a white crystalline powder (TLC analysis on a UNIPLATE Analtech HPTLC-RP18F-plate, eluent methanol/0.5 M NaCl 50/50 : Rf : 0.58).

### The synthesis of INT-6.2

60 g (0.198 mol) of INT-6.1 and 35.7 g (0.09 mol) of dye former C-3 were added to 1 I dimethyl sulfoxide at 55°C. 62.4 ml triethyl amine was added and the reaction was allowed to continue for one and a half hour at 65°C. The reaction mixture was cooled down to room temperature and 2 I acetonitrile was added. The precipitated INT-6.2 was isolated by centrifugation at 3500 rpm. The isolated INT-6.2 was treated three times with acetonitrile, isolated by centrifugation at 3500 rpm for one hour and dried. 50.3 g (y : 67.5 %) of INT-6.2 was isolated (UV-VIS in methanol : λₘₐₓ : 754 nm, limited solubility).

### The synthesis of IR-6

25 g (30.1 mmol) of INT-6.1 was suspended in 750 ml dimethyl sulfoxide at 100°C. 5.51 g (45.2 mmol) 4-dimethylamino-pyridine was added. After 5 minutes a heavy suspension was formed. An additional 250 ml dimethyl sulfoxide was added and the reaction mixture was heated to 110°C. The reaction was allowed to continue for 30 minutes at 110°C. The reaction mixture was cooled down to 30°C, followed by the addition of 1.5 I acetonitrile. IR-6 was isolated by centrifugation at 3500 rpm for one hour. The isolated IR-6 was treated three times with acetonitrile, isolated by centrifugation at 3500 rpm for one hour and dried. 20 g (y : 81.5%) of IR-6 was isolated (isolated (UV-VIS in dimethyl acetamide : λₘₐₓ : 895 nm).

### Example 5: the synthesis of IR-7

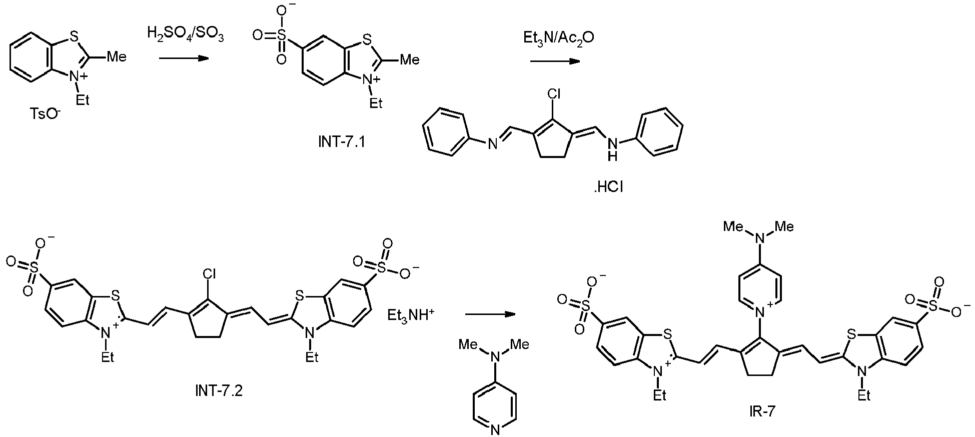

### The synthesis of INT-7.1

52 g (0.149 mol) 3-ethyl-2-methyl-1,3-benzothiazol-3-ium tosylate (Sun et al. Talanta, 136, 210-214 (2015)) was dissolved in 50 ml concentrated sulfuric acid. The reaction mixture was cooled to 20°C. 50 ml of a 65 w% oleum in concentrated sulfuric acid was added dropwise, while maintaining the temperature below 20°C. The reaction was allowed to continue for one hour at room temperature. The reaction mixture was cooled to 0°C and 700 ml methanol was slowly added, while controlling the temperature. The mixture was stirred for two hours at room temperature and the precipitated INT-7.1 was isolated by filtration. The isolated INT-7.1 was washed with methanol and dried. 22.3 g (y : 58 %) of INT-7.1 was isolated (TLC analysis on a UNIPLATE Analtech HPTLC-RP18F-plate, eluent methanol/0.5 M NaCl 50/50 : Rf : 0.84).

### The synthesis of INT-7.2

22 g (0.0855 mol) of INT-7.1 and 14.76 g (0.0427 mol) of dye former C-2 were suspended in 100 ml dimethyl sulfoxide. 40.1 ml acetic anhydride and 23.6 ml triethyl amine were added and the mixture was heated to 65°C. The reaction was allowed to continue for two hours at 65°C. The reaction mixture was allowed to cool down to room temperature. INT-7.2 was isolated by filtration and washed with dimethyl sulfoxide until an almost colorless filtrate was obtained. The isolated INT-7.2 was treated with acetone, isolated by filtration and dried. 15.5 g (y : 49%) of INT-7.2 was isolated (UV-VIS in methanol : λₘₐₓ : 830 nm).

### The synthesis of IR-7

7 g (9.47 mmol) of INT-7.2 was suspended in 80 ml dimethyl sulfoxide. The reaction mixture was flushed with nitrogen and 4.63 g (37.9 mmol) 4-dimethylamino-pyridine was added. The reaction mixture was heated to 130°C and the reaction was allowed to continue for one hour at 130°C. The reaction mixture was allowed to cool down to room temperature and IR-7 was isolated by centrifugation at 3500 rpm for one hour. The isolated IR-7 was treated with methanol and isolated again by centrifugation at 3500 rpm for one hour. The isolated IR-7 was treated with 10 ml methanol, isolated by filtration and dried. 4.21 g (y : 62%) of IR-7 was isolated (UV-VIS in methanol : λₘₐₓ : 847 nm with considerable scattering). In order to exclude the presence of included INT-7.2, a sample of the isolated IR-7 was suspended in dimethyl acetamide for a few hours. If no absorption at 830 nm re-appeared in the spectrum, IR-7 was considered as pure.

### Example 6: the synthesis of IR-12

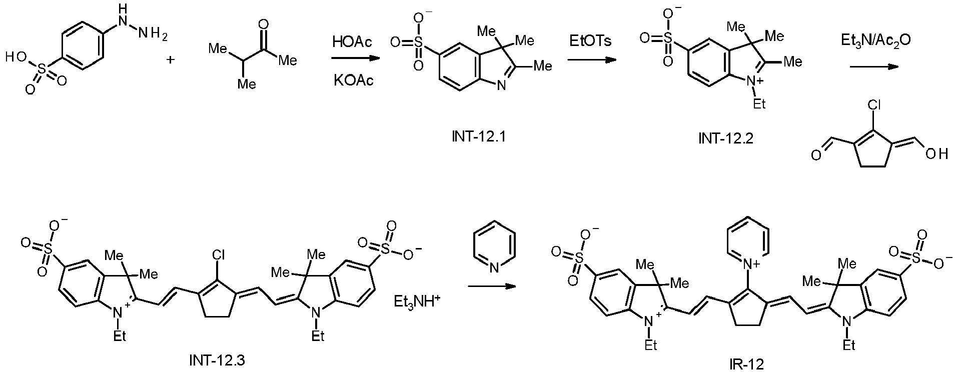

### The synthesis of INT-12.1

29 g of a 65 w% pure 4-hydrazinobenzenesulfonic acid (0.1 mol) was added to 55 ml acetic acid. The reaction mixture was heated to 110°C. 12 g (0.14 mol) methyl isopropyl ketone was added dropwise. A solution of 11.8 g (0.12 mol) water free potassium acetate in 100 ml methanol was added dropwise, while maintaining the temperature at 105°C. The reaction was allowed to continue for 90 minutes at 105°C. The reaction mixture was cooled down to 0°C and INT-12.1 precipitated from the medium. INT-12.1 was isolated by filtration, washed with methanol and ethyl acetate and dried. 27.2 g (y : 98%) of INT-12.1 was isolated (TLC analysis on a Merck TLC Silica gel 60 RP-18F plate, eluent methanol/0.5 M NaCl 60/40 : Rf : 0.72).

### The synthesis of INT-12.2

55.5 g (0.2 mol) of INT-12.1 was dissolved in 200 ml sulfolane. The mixture was heated to 90°C. 44 g (0.22 mol) ethyl tosylate was added. Upon addition the temperature rose to 130°C. The reaction mixture was further heated to 140°C and the reaction was allowed to continue for three hours at 140°C. The reaction mixture was cooled down to room temperature and 1.6 I acetone was added, followed by the addition of 20 ml water. INT-12.2 precipitated from the medium and was isolated by filtration. The crude INT-12.2 was dispersed in 70 ml water and isolated by filtration. INT-12.2 was washed with a small amount of water and with acetone and dried. The isolated INT-12.2 was treated with 150 ml ethanol and refluxed for 15 minutes. The mixture was cooled down to room temperature and INT-12.2 was isolated by filtration, washed with ethanol and dried. 25 g (y : 47%) of INT12.2 was isolated.

### The synthesis of INT-12.3

5 g (18.7 mmol) of INT-12.2 and 1.85 g (11.69 mmol) of dye former C-1 were dissolved in 30 ml methanol. 8.8 ml acetic anhydride and 3.88 ml triethyl amine were added and the temperature rose to 65°C. The reaction mixture was allowed to cool down to room temperature and the reaction was allowed to continue for two hours at room temperature. The reaction mixture was cooled to 0°C and 15 ml ethyl acetate was added to the mixture. INT-12.2 was isolated by filtration, washed with ethyl acetate and dried under reduced pressure. 4.8 g (y : 68%) of INT-12.3 was isolated (TLC analysis on a UNIPLATE Analtech HPTLC-RP18F-plate, eluent methanol/0.5 M NaCl 60/40 : Rf : 0.22; UV-VIS in methanol : λₘₐₓ : 808 nm).

### The synthesis of IR-12

1.5 g (1.97 mmol) of INT-12.3 was dissolved in 15 ml dimethyl sulfoxide. The reaction mixture was flushed with nitrogen. 1.56 g (19.77 mmol) pyridine was added and the reaction mixture was heated to 120°C. The reaction was allowed to continue for one hour at 120°C. The reaction mixture was cooled down to room temperature and IR-12 was isolated by flitration. IR-12 was washed with dimethyl sulfoxide and treated with 15 ml methanol. IR-12 was isolated by filtration and dried under reduced pressure. 1.09 g (y : 79%) of IR-12 was isolated (UV-VIS in methanol : λₘₐₓ : 837 nm).

### Example 7: the synthesis of IR-18

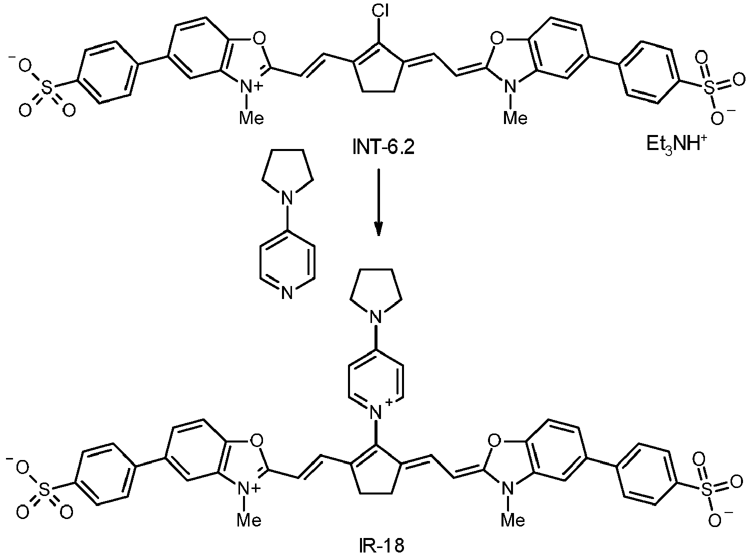

### The synthesis of IR-18

1.5 g (1.8 mmol) of INT-6.2, described in example 4 above, was dissolved in 20 ml dimethyl sulfoxide. The reaction mixture was heated to 100°C and 401 mg (2.7 mmol) of 4-pyrrolidin-1-ylpyridine was added portion wise over 15 minutes. An additional 15 ml dimethyl sulfoxide was added and the reaction was allowed to continue for one hour at 110°C. The reaction mixture was cooled down to 30°C and 50 ml ethanol was added. IR-18 was isolated by centrifugation at 3500 rpm for one hour. The isolated IR-18 was treated three times with 50 ml ethanol and isolated by centrifugation at 3500 rpm for one hour. The isolated IR-18 was dried under reduced pressure. 1.33 g (y : 88%) of IR-18 was isolated (UV-VIS of a suspension in dimethyl acetamide : λₘₐₓ : 897 nm).

### Example 8: the synthesis of IR-19

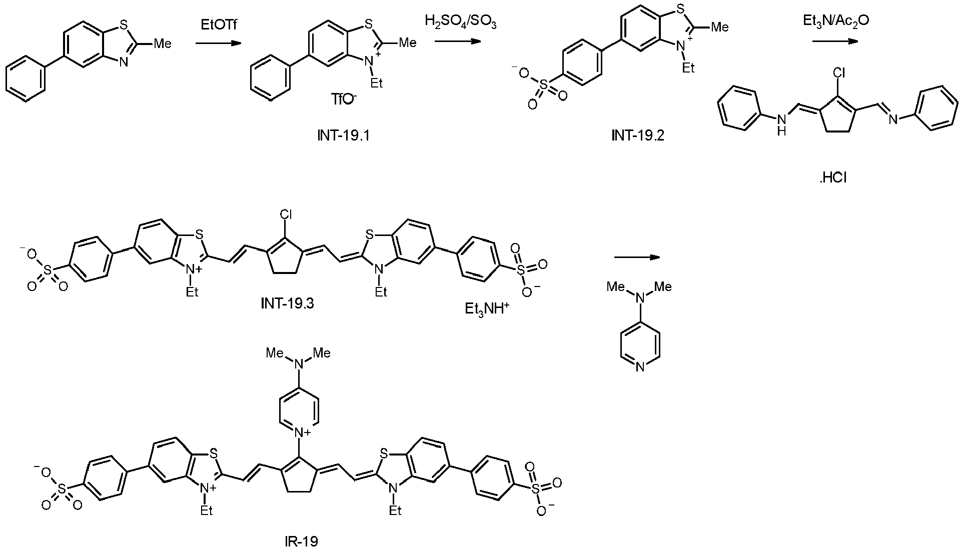

### The synthesis of INT-19.1

10 g (44 mmol) of 2-methyl-5-phenyl-1,3-benzothiazole was dissolved 50 ml methylene chloride. 8.5 ml (66 mmol) ethyl triflate was dropwise added to the reaction mixture while refluxing the mixture. The mixture was refluxed for 30 minutes. An additional 8.5 ml (66 mmol) ethyl triflate was added dropwise and the mixture was refluxed for an additional 30 minutes. The reaction mixture was cooled down to room temperature and 200 ml ethyl acetate was added. INT-19.1 precipitated from the medium, was isolated by filtration and dried under reduced pressure. 12.3 g (y : 69%) of INT-19.1 was isolated.

### The synthesis of INT-19.2

7.88 g (19.5 mmol) of INT-19.1 was dissolved in 8 ml concentrated sulfuric acid. The reaction mixture was cooled to 0°C and 6.5 ml of a 65w% oleum solution in sulfuric acid was added dropwise, while keeping the temperature below 20°C. The reaction was allowed to continue for 30 minutes at room temperature. 100 ml methanol was slowly added. INT-19.2 precipitated from the medium and was isolated by filtration. INT-19.2 was washed with methanol until acid free and dried under reduced pressure; 5.57 g (y : 85.7%) of INT-19.2 was isolated as a white crystalline compound (TLC analysis on a Merck TLC Silica gel 60 RP-18F plate, eluent methanol/0.5 M NaCl 50/50 : Rf : 0.63). INT-19.2 was further analyzed by TLC-MS, according to the method described above.

### The synthesis of INT-19.3

5.5 g (16.5 mmol) of INT-19.2 and 2.85 g (8.2 mmol) of dye former C-2 were suspended in 40 ml dimethyl sulfoxide. 7.75 ml acetic anhydride and 4.5 ml triethyl amine were added and the reaction mixture was heated to 65°C. The reaction was allowed to continue for 30 minutes at 65°C. The reaction mixture was cooled down to 0°C and INT-19.3 was isolated by filtration. INT-19.3 was washed with dimethyl sulfoxide until an almost colorless filtrate was obtained, followed by treating the isolated INT-19.3 with methanol. INT-19.3 was isolated by filtration and dried under reduced pressure. 3.29 g (y : 45 %) of INT-19.3 was isolated (UV-VIS in dimethyl acetamide : λₘₐₓ : 853 nm).

### The synthesis of IR-19

1.4 g (1.57 mmol) of INT-19.3 was suspended in 30 ml dimethyl sulfoxide. The reaction mixture was flushed with nitrogen and 0.77 g (6.3 mmol) 4-dimethylamino-pyridine was added. The reaction mixture was heated to 130°C and the reaction was allowed to continue for two hours at 130°C. The reaction mixture was cooled down to 80°C and IR-19 was isolated by filtration on a filter with a large filter area. The isolated IR-19 was treated with methanol and isolated again on filter with a large filter area. IR-19 was dried under reduced pressure. 0.586 g (y : 42%) of IR-19 was isolated (UV-VIS of a suspension in methanol : λₘₐₓ : 1038 nm).

### B: The synthesis of comparative IR absorbers COMPIR-1 and COMPIR-2

### Example 9: The synthesis of COMPIR-1

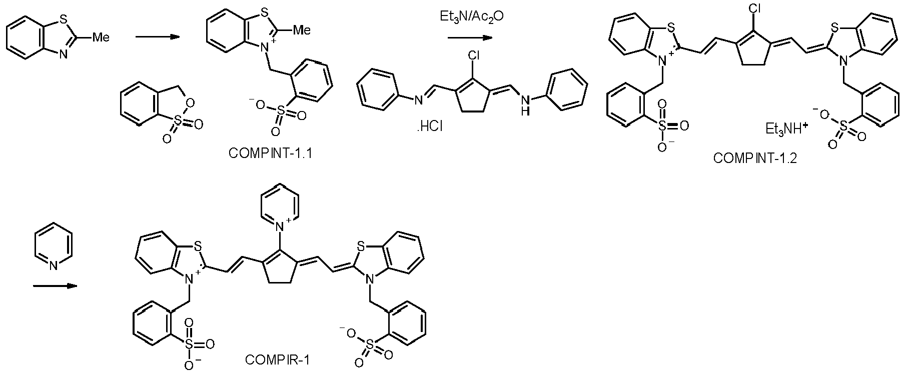

### The synthesis of COMPINT-1.1

37.25 g (0.25 mol) 2-methyl-benzothiazole and 85.1 g (0.5 mol) o.-tolyl sultone (Bakulina et al., Organic and Biomolecular Chemistry, 16(21), 3989-3998 (2018)) were suspended in 90 ml sulfolane. The reaction mixture was heated to 130°C. The reaction was allowed to continue for three and a half hours at 130°C. The reaction mixture was cooled down to room temperature and 100 ml acetone was added. COMPINT-1.1 was isolated by filtration, washed with acetone and dried. 43.7 g (y : 55%) of COMPINT-1.1 was isolated.

### The synthesis of COMPINT-1.2

3 g (9.4 mmol) of COMPINT-1.1 and 1.62 g (4.69 mmol) of dye former C-2 were suspended in 20 ml dimethyl sulfoxide. 4.4 ml acetic anhydride and 2.6 ml triethyl amine were added and the reaction mixture was heated to 65°C. After 15 minutes, an additional 5 ml dimethyl sulfoxide was added. The reaction was allowed to continue for one hour at 65°C. The reaction mixture was cooled down to room temperature. COMPINT-1.2 was isolated by filtration and washed with dimethyl sulfoxide until an almost colorless filtrate was obtained. The isolated COMPINT-1.2 was treated with methanol, isolated by filtration and dried under reduced pressure. 1.64 g (y : 41%) of COMPINT-1.2 was isolated (UV-VIS in dimethyl acetamide : λₘₐₓ : 847 nm).

### The synthesis of COMPIR-1

0.5 g (0.579 mmol) of COMPINT-1.2 was dissolved in 10 ml dimethyl sulfoxide. The reaction mixture was flushed with nitrogen and 485 mg (5.79 mmol) pyridine was added. The reaction mixture was heated to 120°C and the reaction was allowed to continue for one hour at 120°C. The reaction mixture was cooled down to 80°C and COMPIR-1 was isolated by filtration on a filter with a large filter area. The isolated COMPIR-1 was dispersed in 10 ml methanol upon which it spontaneously recrystallized; COMPIR-1 was isolated by filtration on a filter with a large filter area and dried. 126 mg (y : 27%) of COMPIR-1 was isolated (UV-VIS in dimethyl acetamide : λₘₐₓ : 862 nm).

### Example 10: The synthesis of COMPIR-2

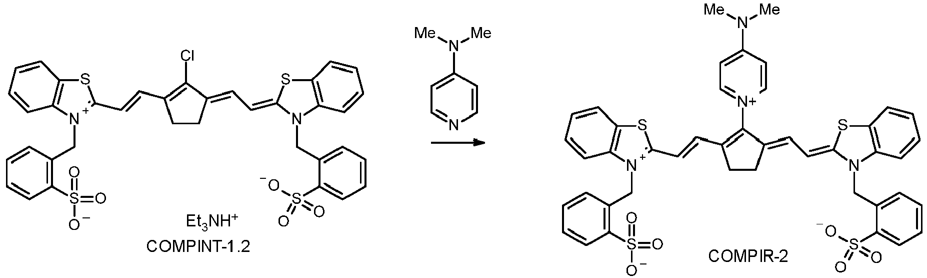

0.5 g (0.579 mmol) of COMPINT-1.2 was dissolved in 6 ml dimethyl sulfoxide. The reaction mixture was heated to 120°C and 283 mg (2.3 mmol) of 4-dimethyamino-pyridine was added. The reaction was allowed to continue for 45 minutes at 120°C. The reaction mixture was cooled down to 80°C and COMPIR-2 was isolated by filtration on a filter with a large filter area. The isolated COMPIR-2 was dispersed in 10 ml methanol. COMPIR-2 was isolated by filtration on a filter with a large filter area and dried. 338 mg (y : 69%) of COMPIR-2 was isolated (UV-VIS in dimethyl acetamide : λₘₐₓ : 860 nm).

### C: Stability testings

### Example 11

This example illustrates the importance of the position of the ionic groups in the bis-zwitterionic infrared absorbers according to the present invention. In this example, the lightfastness performance of IR-3 was compared with the lightfastness performance of COMPIR-1 and COMPIR-2, which are two bis-zwitterionic infrared absorbers from the same basic class of compounds and having almost the same hydrophilicity-hydrophobicity balance.

### The preparation of the dispersion compositions of IR-3, COMPIR-1 and COMPIR-2

100 mg of each infrared absorbers of examples 3, 9 and 10 respectively and 100 mg of a solvent free wetting and dispersing additive Bykjet9152, supplied by Altana, for dispersing and stabilizing organic pigments in printing ink media were added to 10 g water. The respective infrared absorber was dispersed using a Sonics Vibra Cell ultrasound probe for 3 minutes at an output power of 18 watt. The obtained dispersions were respectively used in the coating composition described below.

### The coating composition

A mixture of 4 g ethylene glycol and 5 g water was prepared. 1 g of each dispersion composition was respectively added to the ethylene glycol / water mixture and the resulting ethylene glycol / water dispersion mixture was stirred for 10 minutes. A 2.5 w% solution of a surfactant TIVIDA FL2500, supplied by Merck, in water was prepared. 0.1 g of this surfactant solution was added to the glycol / water dispersion mixture and the resulting mixture was stirred for an additional 10 minutes to form the coating composition. The three respective coating compositions were used in the sample preparation described below.

### The coated samples

A coating with 50 µm ± 5 % thickness of each of the coating compositions prepared above was applied on the white liner of a cardboard as a support material. The coating composition was dried for 5 minutes at 50°C. The prepared coating samples were used in the lightfastness test described below.

### Lightfastness performance of IR-3, COMPIR-1 and COMPIR-2

The coated samples of IR-3, COMPIR-1 and COMPIR-2 were exposed to daylight. The samples were positioned flat on a table behind a south west oriented window and left exposed in a day-night light cycle for several days. The degradation was followed by measuring the optical density at λₘₐₓ in reflection mode, using the method described above. The degradation was expressed as the percentage of optical density at λₘₐₓ left after 10 days of exposure under the conditions described above (% O.D.). The results are summarized in the Table 2 below.

**Table 2**

| **Sample** | **% O.D.** |
|---|---|
| IR-3 | 97 |
| COMPIR-1 | 12 |
| COMPIR-2 | 10 |

From these results it becomes apparent that only the near infrared dyes according to the first aspect of the present invention performs well in an indoor lightfastness test, i.e. exhibits a percentage of optical density at λₘₐₓ left after 10 days of exposure under the conditions described above (% O.D.) of at least 20 %, preferably at least 50 %. The optical density at λₘₐₓ is almost fully retained for the inventive example IR-3, while the comparative examples are almost completely degraded.

### Example 12

This example illustrates that different near infrared dyes according to the first aspect of the present invention show good to excellent lightfastness performance when exposed in a natural daylight indoor exposure for a prolonged period of time.

### Preparation of the dispersions of IR-2, IR-6, IR-7, IR-18 and IR-19

150 mg of each infrared absorbers respectively and 150 mg of Bykjet9152, supplied by Altana, were added to 15 g water. 40 g of 1 mm yttrium stabilized zirconia beads ("high wear resistant zirconia grinding media" from TOSO Co.) were added and placed on a motorized roller table. The infrared absorbers were dispersed for 7 days on the motorized roller table. The beads were removed by filtration and the dispersions were used in the coating compositions described below.

### Preparation of the coating compositions

A mixture of 4 g ethylene glycol and 5 g water was prepared. 1 g of each dispersion was respectively added to the ethylene glycol / water mixture and the resulting ethylene glycol / water dispersion mixture was respectively stirred for 10 minutes. A 2.5 w% solution of surfactant TIVIDA FL2500, supplied by Merck, in water was prepared. 0.1 g of this surfactant solution was added to the ethylene glycol / water dispersion mixture and the resulting coating composition mixture was stirred for an additional 10 minutes. These coating compositions were respectively used in the sample preparation described below.

### Preparation of the samples

A coating having 30 µm ± 5% of each of the coating compositions prepared above was made on the white liner of a cardboard as support material. The coating composition was dried for 5 minutes at 50°C. The prepared samples were used in the lightfastness test described below.

### Lightfastness performance of IR-2, IR-6, IR-7, IR-18 and IR-19

The coated samples of IR-2, IR-6, IR-7, IR-18 and IR-19 were respectively exposed to daylight. The samples were positioned flat on a table behind a south west oriented window and left exposed in a day-night light cycle for several days. The degradation was followed by measuring the optical density at λₘₐₓ in reflection mode, using the method described above. The degradation was expressed as the percentage of optical density at λₘₐₓ left after 30 days of exposure under the conditions described above. The results are summarized in Table 3 below.

**Table 3**

| **Sample** | **% O.D.** |
|---|---|
| IR-2 | 97 |
| IR-6 | 90 |
| IR-7 | 92 |
| IR-18 | 56 |
| IR-19 | 86 |

From the table above it can be concluded that the infrared absorbers according to the present invention all show good to excellent lightfastness performance in natural daylight indoor exposure.

### Example 13

This example illustrates that the infrared absorbers according to the first aspect of the present invention have an excellent lightfastness performance upon exposure to harsher conditions.

### Preparation of the dispersions of IR-3 and IR-7

150 mg of each infrared absorber respectively and 150 mg of Bykjet9152, supplied by Altana, were added to 15 g water. 40 g of 1 mm yttrium stabilized zirconia beads ("high wear resistant zirconia grinding media" from TOSO Co.) were added and placed on a motorized roller table. The infrared absorbers were respectively dispersed for 7 days on the motorized roller table. The beads were removed by filtration and the dispersions were used in the coating compositions described below.

### Preparation of the coating compositions

A 20 w% solution of Mowiol 4 88, supplied by Kuraray, and 0.2 w% of 1,2-benzothiazol-3-one potassium salt was prepared. A mixture of 4 g ethylene glycol and 5 g of the above prepared Mowiol 4 88-solution was prepared. 1 g of each IR-3 and IR-7 dispersion was respectively added to the ethylene glycol / Mowiol mixture and the resulting ethylene glycol / Mowiol dispersion mixture was stirred for 10 minutes. A 2.5 w% solution of surfactant TIVIDA FL2500, supplied by Merck, in water was prepared. 0.1 g of this surfactant solution was added to the ethylene glycol / Mowiol dispersion mixture and the resulting coating composition mixture was stirred for an additional 10 minutes. These coating compositions were respectively used in the sample preparation described below.

### Preparation of the samples

A coating having 30 µm ± 5 % thickness of each of the coating compositions prepared above was applied on the white liner of a cardboard as support material. The coating was dried for 5 minutes at 50°C. The prepared samples were used in the lightfastness test described below.

### Lightfastness performance of IR-3 and IR-7

The light stability class of the infrared absorbers IR-3 and IR-7 was determined in relation to the Blue Wool Scale in terms of Greyscale contrast according to ISO 105 A 02. The tests were done according to ISO 12040:1997 (Graphic technology prints and printing inks, assessment of light fastness using filtered xenon arc light). A Suga SX75 carrousel type water cooled Xenon weatherometer with chiller unit was used. A black panel temperature of less than 45°C was used. Window glass filtered Xe-arc light (42 W/m2 (UV filter: 300 nm 400 nm)), was used at a setpoint of 42 W/m², resulting in a 99.8 klx irradiance in the sample plane. An additional infrared filter was used to filter out the infrared spikes of the Xe-arc lamp.

The samples were measured on a Perkin Elmer λ PE950 UV/VIS/NIR spectro-photometer with 8°/d reflection measurement geometry.

From these evaluations it was determined that IR-7 had a Blue Wool Scale between 5 and 6, while IR-3 had a Blue Wool Scale of at least 7.

## Claims

1. A near infrared dye having a chemical structure according to Formula I, 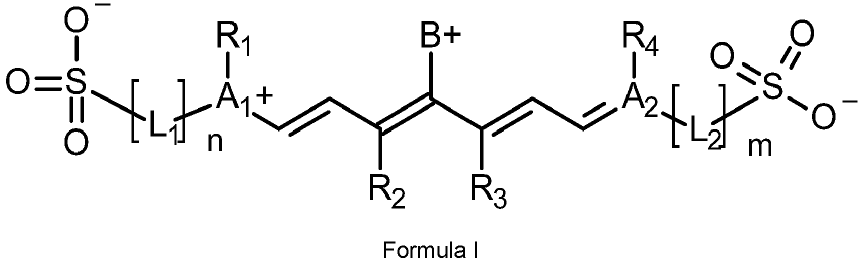 wherein
A₁ and A₂ independently from each other represent an optionally annulated five membered heterocycle;
R₁ and R₄ are independently from each other selected from the group consisting of a substituted or unsubstituted alkyl group, a substituted or unsubstituted alkenyl group, a substituted or unsubstituted alkynyl group, a substituted or unsubstituted aralkyl group, a substituted or unsubstituted alkaryl group and a substituted or unsubstituted aryl or heteroaryl group;
n and m independently from each other represent 0 or 1;
L₁ and L₂ independently from each other represent a divalent linking group comprising 1 to 14 carbon atoms and coupled to a carbon atom of respectively A₁ and A₂;
B represents a nitrogen containing functional group;
R₂ and R₃ are independently from each other selected from the group consisting of a hydrogen, a substituted or unsubstituted alkyl group, a substituted or unsubstituted alkenyl group, a substituted or unsubstituted alkynyl group, a substituted or unsubstituted aralkyl group, a substituted or unsubstituted alkaryl group and a substituted or unsubstituted aryl or hetero-aryl group; and
wherein the substituents R₂ and R₃ optionally together represent the necessary atoms to form a five to eight membered ring.

2. The near infrared dye according to claim 1 having a chemical structure according to Formula II, 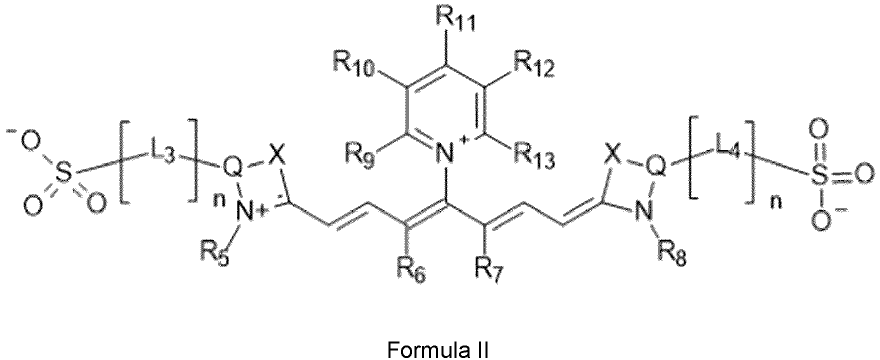 wherein
R₅ and R₈ are independently from each other selected from the group consisting of a substituted or unsubstituted alkyl group, a substituted or unsubstituted alkenyl group, a substituted or unsubstituted alkynyl group, a substituted or unsubstituted aralkyl group, a substituted or unsubstituted alkaryl group and a substituted or unsubstituted aryl or heteroaryl group;
R₆ and R₇ are independently from each other selected from the group consisting of a hydrogen, a substituted or unsubstituted alkyl group, a substituted or unsubstituted alkenyl group, a substituted or unsubstituted alkynyl group, a substituted or unsubstituted aralkyl group, a substituted or unsubstituted alkaryl group and a substituted or unsubstituted aryl or hetero-aryl group;
wherein the substituents R₆ and R₇ optionally together represent the necessary atoms to form a five to eight membered ring;
R₉ to R₁₃ are independently from each other selected from the group consisting of a hydrogen, a substituted or unsubstituted alkyl group, a substituted or unsubstituted alkenyl group, a substituted or unsubstituted alkynyl group, a substituted or unsubstituted aralkyl group, a substituted or unsubstituted alkaryl group, a substituted or unsubstituted aryl or heteroaryl group, an alkoxy, an amine, an ester, an amide, a halogen and a thioether;
wherein the respective neighbouring substituents R₉ and R₁₀, R₁₀ and R₁₁, R₁₁ and R₁₂, and/or R₁₂ and R₁₃ optionally together represent the necessary atoms to form a five to eight membered ring;
X is selected from the group consisting of S, O, NR₁₄ and CR₁₅R₁₆;
R₁₄, R₁₅ and R₁₆ are independently from each other selected from the group consisting of a substituted or unsubstituted alkyl group, a substituted or unsubstituted alkenyl group, a substituted or unsubstituted alkynyl group a substituted or unsubstituted alkaryl group, a substituted or unsubstituted aralkyl group and a substituted or unsubstituted aryl or heteroaryl group;
Wherein the substituents R₁₅ and R₁₆ optionally together represent the necessary atoms to form a five to eight membered ring;
Q represents the necessary atoms to form an optionally annulated five membered heterocycle;
n represents 0 or 1; and
L₃ and L₄ independently from each other represent a divalent linking group comprising 1 to 14 carbon atoms and coupled to a carbon atom of Q.

3. The near infrared dye according to claim 1 or 2 having a chemical structure according to Formula III or IV, 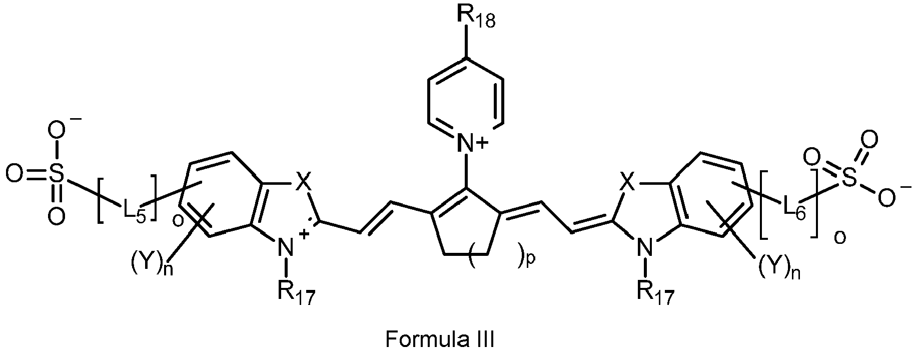 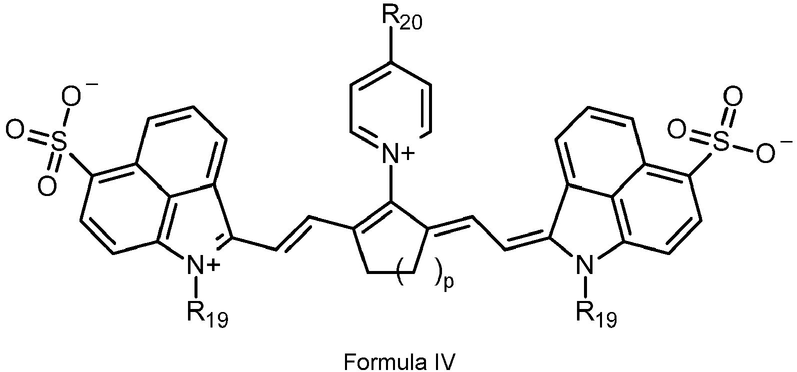 wherein
X represents S or O;
Y represents a hydrogen or a substituent selected from the group consisting of a substituted or unsubstituted alkyl group, a substituted or unsubstituted alkenyl group, a substituted or unsubstituted alkynyl group a substituted or unsubstituted alkaryl group, a substituted or unsubstituted aralkyl group, a substituted or unsubstituted aryl or heteroaryl group, a halogen and an alkoxy group;
n represents an integer from 1 to 3;
L₅ and L₆ independently from each other represent a divalent linking group comprising 1 to 14 carbon atoms;
o represents 0 or 1;
p represents 1 or 2;
R₁₇ and R₁₉ independently from each other represent a substituted or unsubstituted alkyl group;
R₁₈ and R₂₀ independently from each other represent a hydrogen, a substituted or unsubstituted alkyl group or NR₂₁R₂₂;
R₂₁ and R₂₂ are independently from each other selected from the group consisting of a substituted or unsubstituted alkyl group, a substituted or unsubstituted alkenyl group, a substituted or unsubstituted alkynyl group a substituted or unsubstituted alkaryl group, a substituted or unsubstituted aralkyl group and a substituted or unsubstituted aryl or heteroaryl group; and
wherein the substituents R₂₁ and R₂₂ optionally together represent the necessary atoms to form a five to eight membered ring.

4. The near infrared dye according to claim 3 wherein p represents 1.

5. The near infrared dye according to claim 3 or 4 wherein R₁₇ and R₁₉ independently from each other represent a methyl or an ethyl group.

6. The near infrared dye according to any of the claims 3 to 5 wherein Y represents a hydrogen, a C1 to C4 alkyl group, a C1 to C4 alkoxy group or a halogen.

7. The near infrared dye according to any of the claims 3 to 6 wherein L₅ and L₆ represent a benzene ring.

8. A dispersion composition comprising a near infrared dye as defined in any of the claims 1 to 7 and one or more dispersion additives.

9. A resin based article comprising a near infrared dye as defined in any of the claims 1 to 7.

10. A coating comprising a near infrared dye as defined in any of the claims 1 to 7 applied on a support material.

11. A radiation curable composition comprising a near infrared dye as defined in any of the claims 1 to 7 and one or more radiation curable additives.

12. The radiation curable composition according to claim 11 wherein the composition is a UV curable inkjet ink.

13. Use of a near IR dye as defined in any of the claims 1 to 7 in applications requiring high weathering stability.

14. The use according to claim 13 wherein the applications are selected from climate control systems in buildings and cars, polymer processing and additive manufacturing technologies based on resin fusing, optical filters, solar cells, light emitting diodes and drying accelerators, and security applications, preferably security ink applications on security and valuable documents, such as banknotes.
